# EUROPEAN PATENT APPLICATION

(11) **EP 4 687 037 A1**
(43) Date of publication of application: **04.02.2026**
(21) Application number: 24192018.0
(22) Date of filing: 31.07.2024
(51) Int. Cl.: G06F 9/54

(54) **METHOD FOR PUSHING EVENT MESSAGES**

(71) Applicant: Barclays Execution Services Limited, London E14 5HP (GB)
(72) Inventor: KUMAR, Sumit, 411014 Maharashtra (IN); PATHAK, Nikesh, 411014 Maharashtra (IN); KASALE, Sagun, 411014 Maharashtra (IN); PATEL, Jigneshkumar Kuberbhai, 411014 Maharashtra (IN); JADHAV, Abhijit, 411014 Maharashtra (IN)
(74) Representative: Carpmaels & Ransford LLP

(57) **Abstract**

A computer-implemented method for pushing one or more event messages to one or more cloud-based data service applications. The method comprising: receiving a first publication trigger signal indicating that one or more event messages of a first event type are to be published, wherein the one or more event messages of the first event type are stored in an event storage database; identifying the one or more event messages of the first event type in the event storage database; retrieving the one or more event messages of the first event type from the event storage database; identifying a first mapping from a plurality of stored mappings, the first mapping corresponding to the first event type; retrieving the first mapping; updating metadata associated with the one or more event messages of the first event type to indicate that publication has occurred; and pushing the one or more event messages of the first event type to one or more cloud-based data service applications according to the first mapping.

## Description

### Technical Field

The present invention relates to methods, computer program products, computer readable media comprising instructions, and systems for pushing one or more event messages to one or more cloud-based data service applications.

### Background

In contemporary digital environments, data has become ubiquitous, with a notable surge in the prevalence of protected data. Defined by its sensitive cognitive content and requirement for rigorous security measures, the prominence of protected data is steadily increasing. Consequently, there has been a corresponding escalation in the demand for systems specialised in processing protected data.

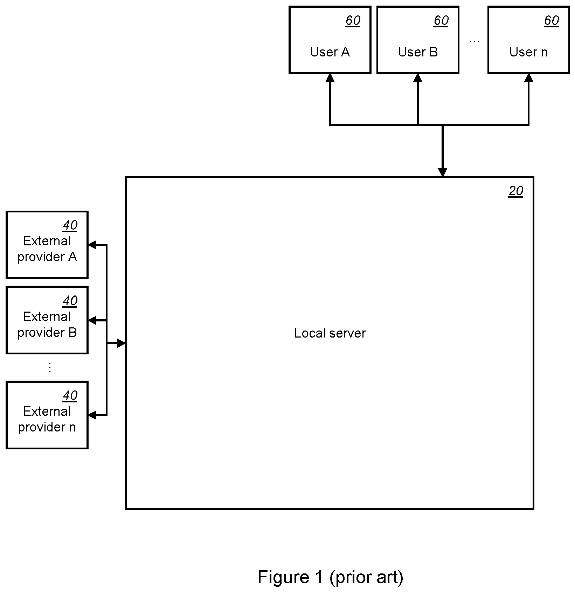

Traditionally, the processing of protected data has been centralised around local servers, as depicted in Figure 1. A local server serves as the focal point responsible for executing protected data processing tasks. These local servers are typically situated on-premises or within a private network environment, physically hosting a myriad of applications specialised in processing various aspects of protected data. In practical scenarios, these applications cater to diverse purposes, often corresponding to distinct products or services. For instance, in the context of consumer banking, one application may handle debit card transactions, while another may focus on credit card transactions.

Despite their historical prevalence, local servers are increasingly facing challenges for protected data processing. Such challenges include scalability constraints, overhead associated with maintenance, geographic limitations, data protection compliance, security vulnerabilities, computer resource redundancy, and latency issues. In light of these challenges and the everincreasing complexity of the data processing landscape, a need has emerged for systems for processing protected data that transcend the limitations of local servers.

In any system for processing protected data which transcends the limitation of local servers, it is usually necessary for information to be output from and dispersed correctly between applications. This capability is key for the operability of any distributed or virtualised system so that said applications remain interoperable and communicatively coupled to one another for completing execution of processes which require protected data from and/or processing by more than one of these applications. One such way of transferring information is as event messages within an event driven architecture, where event messages are produced by an application and are sent to one or more downstream applications. Generally, the downstream applications to which the event messages are sent include data service applications, which may be event streams or message queues, from which the event messages may be read by further downstream applications. Data service applications may, in some embodiments, also include downstream applications with API endpoints.

While event driven architectures are highly efficient and failure-resistant due to the loose coupling between the applications communicating via event messages, this relies upon event messages being reliably pushed to the correct data service applications. Typically at present, the ability to guarantee pushing of an event to the appropriate data service application relies on the design of the individual applications. However, the computational and code maintenance overhead of providing applications which each comprise reliable systems for guaranteeing the pushing of event messages to data service applications is untenable from a maintenance and security perspective. Moreover, by providing the capability to push events within the individual applications, this decentralises the standards and implementation for pushing the events, thereby causing both the security of sending event messages to be inconsistent and the standardisation of event messages to deviate. This decentralisation leads to less interoperable applications and results in security vulnerabilities being introduced over time. Furthermore, by providing in-application event message pushing capability, errors in pushing event messages must also be handled on an application-by-application basis. This application-by-application error handling increases the difficulty of recognising and responding to errors, resulting in errors which cannot be resolved in a sufficiently short time. In turn, this decreases event message security and leads to a more inefficient protected data processing system.

Therefore, there exists a need for improved facilities for the guaranteed and secure pushing of event messages to data service applications, especially in the context of protected data processing systems.

### Summary

The present invention is defined by the independent claims, with further optional features being defined by the dependent claims.

In a first aspect of the invention, there is provided a computer-implemented method for pushing one or more event messages to one or more cloud-based data service applications, the method comprising: receiving a first publication trigger signal indicating that one or more event messages of a first event type are to be published, wherein the one or more event messages of the first event type are stored in an event storage database; identifying the one or more event messages of the first event type in the event storage database; retrieving the one or more event messages of the first event type from the event storage database; identifying a first mapping from a plurality of stored mappings, the first mapping corresponding to the first event type; retrieving the first mapping; updating metadata associated with the one or more event messages of the first event type to indicate that publication has occurred; and pushing the one or more event messages of the first event type to one or more cloud-based data service applications according to the first mapping. By determining the data service application to push event messages of a first event type to using a first mapping, the invention allows alterations of the data service application to which event messages are pushed by declaration rather than code change. This improves security by allowing security fixes and preventative updates to be applied more easily and without the risk of introducing code-based vulnerabilities. This also minimises the downtime required to push event messages to a new data service application or to push new types of event messages, thereby improving overall system efficiency. By intaking events from a file and outputting these events in a generalisable manner using mappings, the invention also decouples event message pushing capabilities from other applications. This decoupling centralises the capability to push events, thereby further improving security and efficiency by preventing events being pushed using a variety of processes on an application-by application basis where standards for checks and processes cannot be unified and upheld. By triggering the method of the invention in response to the signal and processing events from a database, the present invention provides high efficiency event message transmission by being able to control network traffic based upon the trigger signals and by taking advantage of batch processing and scale-based efficiencies when more than one event message can be identified and processed at the same time. Finally, by centralising the pushing of event messages and intaking event messages from a file, the invention can guarantee (and act as a single point of truth to guarantee) whether or not an event message has been pushed to a data service application, thereby maximising the success rate of event messages reaching their intended destination.

In some embodiments, the event storage database further comprises message status data for each of the one or more event messages of the first event type. In this way, the status of pushing an event message or whether the event message is ready to push can be retained as status data in the same location as the event is retrieved from by the present invention. This availability of status information allows the status of event messages to be identified by any application with read access for the event storage database, thereby improving system efficiency through allowing faults and delays to be readily identified. Moreover, security and disaster recovery are improved through this feature providing an auditable single point-of-truth event storage database from which status data indicative of any single event being pushed or even failing to be pushed can be identified.

In some embodiments, the method further comprises: generating, by a cloud-based signalling service, the first publication trigger signal; and sending, from the cloud-based signalling service to the cloud-based virtual machine cluster, the first publication trigger signal when a predetermined time is reached. In this way, the method for pushing event messages can be started at a specific time or periodic interval to ensure that event messages are pushed to the required data service applications at the required time, thereby ensuring system efficiency is maintained. In further embodiments, the first publication trigger signal indicates more than one event messages to be published. By pushing more than one event message at a predetermined time for event messages which do not require immediate handling, the system can ensure that event messages are handled as batches, guaranteeing that the event messages can be pushed and processed as a batch to maximise computational efficiency. For example, event messages which are handles as batches can be aggregated into a single batch which the push adapter can make a single request to post to a data service application, thereby reducing network traffic. Kinesis Producer Library may be used to batch event messages for data service applications which are event streams implemented using Amazon Kinesis.

In some embodiments, the method further comprises: identifying, by a cloud-based signalling service, ready-to-publish statuses in the message status data of the one or more event messages of the first event type; generating, by the cloud-based signalling service, the first publication trigger signal in response to the one or more identified ready-to-publish statuses; and sending, from the cloud-based signalling service to the cloud-based virtual machine cluster, the first publication trigger signal. In this way, the event messages can be pushed as soon as they are ready to be pushed based upon the message status data for each event, thereby both allowing event messages to be reactively handled and minimising latency in sending event messages. In further embodiments, the first publication trigger signal indicates one event message to be published. By handling one event message at a time based upon message status data, the event messages can be pushed at the earliest opportunity after their creation where there is an immediate need for the event messages in a data service application or further downstream applications.

In some embodiments, if the first mapping corresponding to the first event type cannot be identified, the method further comprises: processing, by the cloud-based virtual machine cluster, an error flow in response to failing to identify a first mapping corresponding to the first event type. By providing error handling through an error flow in response to a first mapping not being identifiable, integration issues in pushing event messages can be rapidly and accurately identified (and rectified) such that the overall efficiency of sending event messages can be improved and maintained. Moreover, by entering the error flow in response to not recognising the event type, system security can be improved as unrecognised event messages which may be malicious are treated as errors and prevented from propagating by being pushed. In this way, the mappings act as a further layer of security to prevent the propagation of malicious event messages.

In some embodiments, the method further comprises assessing whether a schema of one or more event messages of the first event type needs to be validated. In this way, steps ensuring that applications correctly integrate can be incorporated into the method of pushing event messages. This improves computational efficiency and eases maintenance through centralising the validation of event messages before the event messages are pushed, thereby preventing the computational and maintenance overhead of integrating these checks into upstream or downstream applications. Moreover, from a security perspective, this centralisation of validation restricts widescale access to event message schemas, thereby introducing another barrier for malicious event messages which may seek to be pushed to data service applications (by preventing access to information which may allow a valid event message scheme to be copied). In further embodiments, if the schema of the first event type needs to be validated, the method further comprises: validating, by a cloud-based registry service, the schema for each of the one or more event messages of the first event type against schema records stored in the cloud-based registry service. This further improves the security of the system, by storing event schemas in a dedicated service. Moreover, by utilising a cloud-based registry service, the need to update across instances of the method for pushing event messages further reduces maintenance overhead and improves the configurability of the method by easing the declaration of new event message schemas. In yet further embodiments, if an event message fails validation against the schema records stored in the cloud-based registry service, processing an error flow corresponding to the event message which failed validation against the schema records stored in the cloud-based registry service. By entering an error flow for failing to validate the schema of an event message, malicious event messages alongside genuine event messages with incorrect schemas (which may be unreadable by downstream systems) can be prevented from being pushed to data service applications. In addition, by identifying event messages with incorrect schemas before they are pushed, correction of these event messages only needs to occur once.

In further embodiments the error flow comprises the steps of; determining, by the cloud-based virtual machine cluster, if the event message failed validation; and if the event message failed validation, updating the message status data for the event message to a validation failure status and ending processing of the event message; or if the event message passed validation, repeating the failed method step until the failed method step succeeds or a predetermined number of retry step attempts is reached. In this way, the error flow can separate permanent and transient errors in the pushing of error messages, allowing for transient errors to be automatically overcome in some instances by retrying pushing of the event messages to one or more data service applications.

In some embodiments, the method further comprises identifying whether the first mapping corresponding to the first event type requires the one or more event messages to be decrypted; and decrypting, by a cloud-based decryption service, the one or more event messages based upon the first mapping prior to updating the metadata associated with the one or more event messages. In this way, event messages can be decrypted as they are pushed to data service applications. This improves security by limiting the access required by individual applications to decryption services, thereby also limiting the sources of vulnerability through which protected data may be decrypted. Also, this feature prevents event messages from being decrypted before it is necessary to do so (i.e. in upstream applications which are not reliant upon the information content of the event messages).

In some embodiments, the method further comprises generating reconciliation data based upon pushing the one or more event messages to the one or more cloud-based data service applications according to the first mapping. By generating reconciliation data, the functioning of pushing event messages can be evaluated quickly and easily, allowing a high overall efficiency to be evaluated and maintained. Moreover, this data may act as a single point-of-truth for event messages which were not able to be pushed and the circumstances leading to these event messages not being able to be pushed, thereby easing the identification of faults and improving security by making malicious or anomalous event messages clearly identifiable.

In some embodiments, the method further comprises: receiving a second publication trigger signal indicating that one or more event messages of the first event type are to be published, wherein the one or more event messages of the first event type are stored in an event storage database; identifying the one or more event messages of the first event type in the event storage database; retrieving the one or more event messages of the first event type from the event storage database; identifying the first mapping from a plurality of stored mappings, the first mapping corresponding to the first event type; retrieving the first mapping; updating metadata associated with the one or more event messages of the first event type to indicate that publication has occurred; and pushing the one or more event messages of the first event type to the same cloud-based data service applications according to the first mapping. In this way, the pushing of event messages can be repeated as required to process and push event messages. This reusability improves computational efficiency by enabling one implementation of the method to both handle all event messages from one or more upstream applications and push these event messages to one or more data service applications as required by the event type of event message being pushed.

In some embodiments, the one or more cloud-based data service application is Kafka, SQS or Kinesis. In this way, the data service applications are cloud-based streaming or queueing services. This enables the method of pushing event messages to be independent of changes to downstream applications requiring the event messages as long as those downstream applications are permitted to read event messages from the streaming or queuing service. This reduces the maintenance requirements of mappings. Moreover, by pushing to cloud-based streaming or queueing services (which multiple downstream applications may be able to read), the number of applications the event messages need to be pushed to decreases, thereby reducing network traffic.

In a second aspect of the invention, there is provided a computer program product comprising instructions which, when executed by a cloud-based virtual machine cluster, cause the cloud-based virtual machine cluster to perform the steps of the first aspect of the invention.

In a third aspect of the invention, there is provided a (non-transitory) computer readable medium comprising instructions which, when executed by a cloud-based virtual machine cluster, cause the cloud-based virtual machine cluster to perform the method of the first aspect of the invention.

In a fourth aspect of the invention, there is provided a cloud-based virtual machine cluster, the cloud-based virtual machine cluster comprising at least one processor, wherein the at least one processor is configured to perform the method of the first aspect of the invention.

### Brief Description of the Drawings

Embodiments of the invention are described below, by way of example, with reference to the following drawings, in which:
Figure 1 depicts a conventional system for processing protected data.
Figure 2 illustrates a cloud computing environment-based system for processing protected data in which the methods of the invention may be implemented.
Figure 3A and Figure 3B show components of a cloud computing environment for implementing the invention.
Figure 4A and Figure 4B show an example user device and example external provider system, respectively, that may be used in conjunction with the cloud computing environment-based system of the invention.
Figure 5 shows an example architecture of a cloud computing environment for implementing the invention.
Figure 6A, Figure 6B and Figure 6C show example integration patterns of a cloud computing environment for implementing the invention.
Figure 7 depicts an example implementation of a push adapter in a cloud computing environment.
Figure 8 shows an example flow diagram for pushing one or more event messages to one or more cloud-based data service applications.
Figure 9 shows an example flow diagram for an error flow to handle errors arising from attempting to push one or more event messages to one or more cloud-based data service applications.

### Detailed Description

The present disclosure pertains to systems for processing protected data and methods related to processing protected data. Protected data, as referred to herein, is data that requires protecting due to its cognitive content. This means that protected data typically requires additional security provisions to prevent unauthorised access. Moreover, the storage and processing of protected data is often restricted. In some instances, the restriction is caused by local legislation, for example General Data Protection Regulation (GDPR) in the European Union, and the Data Protection Act 2018 in the United Kingdom. Protected data may include personal data, i.e., information relating to an identified or identifiable natural person. For example, protected data may include a name, an identification number, location data, an online identifier or one or more factors specific to the physical, physiological, genetic, mental, economic, cultural or social identity of a natural person. Protected data may also include financial data as an alternative or in addition.

Figure 1 illustrates a conventional system for processing protected data. As shown in Figure 1, such systems are centralised around a local server 20 that is responsible for performing the processing. The local server 20 is communicatively coupled to a plurality of user devices 60 (i.e. User A, User B... User n), from which processing requests may be received and to which processing outputs may be sent. Typically, a processing request relates to protected data of the user of the user device 40 that sends the request. The local server 20 is also communicatively coupled to a plurality of external provider systems 40 (i.e. External provider A, External provider B... External provider n), as some processes require input from an external provider to be performed. The communicative coupling is established via at least one communication network such as the Internet, a local area network (LAN), a wide area network (WAN), a cellular network (e.g. such as 3G, 4G LTE and 5G), and the like.

Local server 20 is a physical server or group of servers that are located on-premises or within a private network. Local server 20 stores a plurality of applications for processing protected data, each of the applications having a different purpose or underlying product to which it relates. For example, in a consumer banking context, one application may relate to debit card transactions while another application relates to credit card transactions.

The applications stored by local server 20 are typically batch-driven applications. This type of application is designed to process data in batches, where a set of data is collected, processed, and output before the next set of data is collected and processed. In this context, a 'batch' refers to a collection or grouping of data, tasks, or operations that are processed together as a single unit. Batch processing involves the execution of multiple tasks or data operations in a sequential or parallel manner, typically on a scheduled basis or when a predefined batch size is reached. Batches are often used to efficiently manage and process large volumes of data or perform complex operations that do not require real-time or immediate processing. Forthis reason, batch-driven applications may be thought of as synchronous applications. This is in contrast to event-driven applications which are asynchronous applications as the processing occurs once the data is received.

The local server 20 is configured to generate and receive messages in a relational data format. Relational data formats are structured and organised in tables, with rows representing records and columns representing attributes. This type of data format is commonly used in traditional database management systems and can be easily queried and manipulated using Structured Query Language (SQL). The use of a relational data format for message generation and reception at the local server 20 allows for compatibility with legacy systems and applications that rely on this type of data format.

### The Cloud Computing Environment

In contrast to conventional protected data processing systems such as the one depicted in Figure 1 where processing is performed primarily on the local server 20, the systems of the invention use a cloud computing environment 10 for protected data processing. Cloud computing environment 10 provides improved scalability, flexibility, reliability, and disaster recovery capabilities over local servers. This is because the infrastructure for cloud computing environment 10 is typically provided by dedicated cloud providers such as Amazon Web Services (AWS), Google Cloud or Microsoft Azure, that handle updates and maintenance of the infrastructu re.

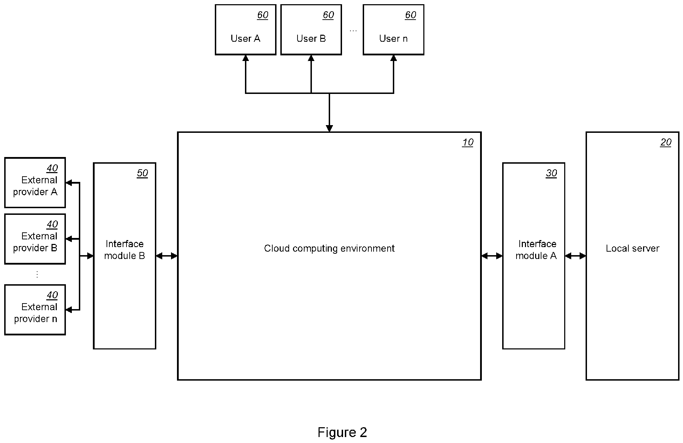

Figure 2 depicts an example system having a cloud computing environment 10 for processing protected data in which the methods of the invention may be implemented. As shown in Figure 2, the local server 20 is still present in this system. However, instead of being communicatively coupled to the plurality of user devices 60 and the plurality of external provider systems 40, the local server 20 is communicatively coupled to the cloud computing environment 10, and it is the cloud computing environment 10 which is communicatively coupled to the plurality of user devices 60 and the plurality of external provider systems 40. The communicative coupling is established via at least one communication network such as the Internet, a local area network (LAN), a wide area network (WAN), a cellular network (e.g. such as 3G, 4G LTE and 5G), and the like. Preferably, the at least one communication network utilises encryption (e.g., Secure Sockets Layer) to secure protected data being transferred to and from the cloud computing environment 10.

While the plurality of user devices 60 are able to natively couple to the cloud computing environment 10, for example via a dedicated application installed on the user device 60, local server 20 and external provider systems 60 typically contain legacy infrastructure and applications, and for this reason cannot natively be coupled to the cloud computing environment 10. This is because, unlike local server 20 and external provider systems 60 which use batch-driven applications, cloud computing environment 10 uses event-driven applications, where data is processed as events.

In the context of event-driven applications, an 'event' refers to a discrete and significant occurrence or notification within the cloud computing environment 10 that triggers a specific action or process. The data packet comprising information about each event is herein referred to as an event message. Event messages are used to signal that a particular condition or change has occurred and should be processed or responded to. For this reason, event-driven applications are designed to detect, capture, and respond to these event messages in real-time or near-real-time, allowing for responsive and dynamic behaviour within event-driven applications. Events can be generated by various sources, such as user interactions via user device 60, system events, or external sources such as external provider system 40 and local server 20, and they serve as the catalyst for initiating specific actions, processing logic, or workflows within the cloud computing environment 10.

Accordingly, interface modules are provided in the system to couple the local server 20 and the external provider systems 60 with the cloud computing environment 10. Specifically, Figure 2 shows a first interface module (interface module A) 30 that couples the local server 20 to the cloud computing environment 10, and a second interface module (interface module B) 50 that couples the external provider systems 60 to the cloud computing environment 10. Interface module A 30 and interface module B 50 may be outside and separate from the cloud computing environment. However, preferably, the cloud computing environment 10 contains interface module A 30 and interface module B 50. When interface module A 30 and interface module B 50 are provided in the cloud computing environment 10, these interface modules provide communicative coupling to the plurality of user devices 60 and the plurality of external provider systems 40, respectively.

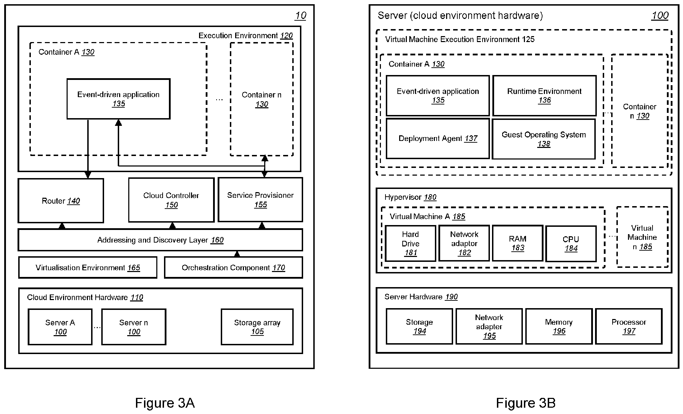

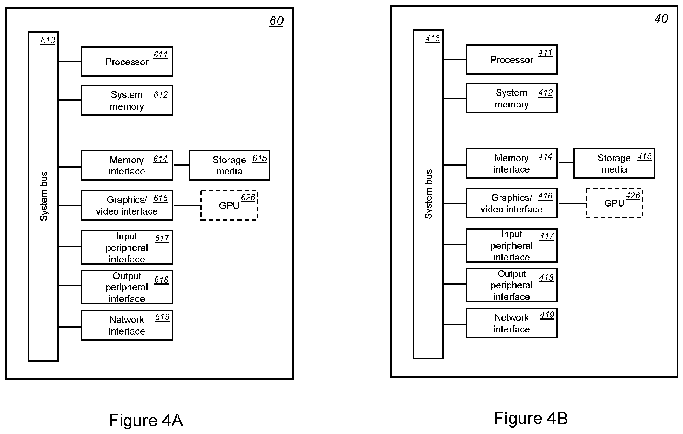

Before providing further details about cloud computing environment 10, interface module A 30, and interface module B 50, the components of cloud computing environment 10, as typically provided by a cloud provider, are discussed with respect to Figure 3A and Figure 3B. Additionally, an example user device 60 and example external provider system are discussed with respect to Figure 4A and Figure 4B.

As shown in Figure 3A, cloud computing environment 10 hosts one or more event-driven applications 135, which are executed in the cloud computing environment 10 for processing protected data that take the form of event messages. The event-driven application 135 may include executable and/or source code, depending on the implementation language. In this way, the computing resources required for processing protected data are moved from the local server 20, where the processing is performed in conventional systems, to cloud computing environment 10.

As seen in Figure 3A, cloud computing environment 10 comprises cloud computing environment hardware 110 that can be invoked to instantiate data processing, data storage, or other computer resources using cloud computing hardware 110 for a limited or defined duration. Cloud computing environment hardware 110 may comprise one or more physical servers 100, and a storage array network 105, as well as other suitable hardware. Cloud computing environment hardware 110 may be configured to provide a virtualisation environment 165 that supports the execution of a plurality of virtual machines 185 across the one or more physical servers 100. As described in relation to Figure 3B, the plurality of virtual machines 185 provide various services and functions for cloud computing environment 10.

Virtualisation environment 165 of Figure 3A includes orchestration component 170 that monitors the cloud computing environment hardware 110 resource consumption levels and the requirements of cloud computing environment 10 (e.g., by monitoring communications routed through addressing and discovery layer 160), and provides additional cloud computing environment hardware 110 to cloud computing environment 10 as needed. For example, if cloud computing environment 10 requires additional virtual machines 185 to host a further event-driven application 135, orchestration component 170 can initiate and manage the instantiation of the virtual machines 310 on the one or more servers 100 to support such needs. In one example implementation, virtualisation environment 165 may be implemented by running Amazon Elastic Compute Cloud (Amazon EC2) on servers 100.

Cloud computing environment 10 supports an execution environment 125 that comprises a plurality of virtual machines 185 (or plurality of containers 130) instantiated to host the one or more event-driven applications 135.

Event-driven applications 135 can access internal services provided by cloud computing environment 10 as well as external services from the plurality of external providers 40 and from the local server 20. A service provisioner 155 may serve as a communications intermediary between these available services (e.g., internal services and external services) and other components of cloud computing environment 10 (e.g., cloud controller 150, router 140, containers 130), utilising the methods discussed elsewhere herein. Addressing and discovery layer 160 provides a common interface through which components of cloud computing environment 10, such as service provisioner 155, cloud controller 150, router 140 and containers 130 in the execution environment 125 can communicate.

Cloud controller 150 is configured to orchestrate the deployment process for the one or more event-driven applications 135 in cloud computing environment 10. Typically, once cloud controller 150 successfully orchestrates the event-driven application 135 in a container, e.g. container A 130, the event-driven application 135 may be interacted with. For example, a user device 60 may interact with the event-driven application 135 through a web browser or any other appropriate user application residing on user device 60. Router 140 receives the access requests (e.g., a uniform resource locator or URL) and routes the request to container 130 which hosts the event-driven application.

It should be recognised that the embodiment of Figure 3A is merely exemplary and that alternative cloud computing environment architectures may be implemented consistent with the teachings herein.

Figure 3B is a schematic of an exemplary server 100 for implementing the cloud computing environment 10 of the invention. In particular, Figure 3B depicts server 100 comprising server hardware 190 and virtual machine execution environment 125 having containers 130 with event-driven applications 135. The server hardware 190 may include local storage 194, such as a hard drive, network adapter 195, system memory 196, processor 197 and other I/O devices such as, for example, a mouse and keyboard (not shown).

A virtualisation software layer, also referred to as hypervisor 180, is installed on top of server hardware 190. Hypervisor 180 supports virtual machine execution environment 185 within which containers 130 may be concurrently instantiated and executed. In particular, each container 130 one or more event-driven applications 135, deployment agent 137, runtime environment 136 and guest operating system 138 packaged into a single object. This enables container 130 to execute event-driven applications 135 in a manner which is isolated from the physical hardware (e.g. server hardware 190, cloud computing environment hardware 110), allowing for consistent deployment regardless of the underlying physical hardware.

As shown in Figure 3B, virtual machine execution environment 125 of server 100 supports a plurality of containers 130. Docker is an example of a platform for providing a virtual machine execution environment 125 that supports containers 130. For each container 130, hypervisor 180 manages a corresponding virtual machine 185 that includes emulated hardware such as virtual hard drive 181, virtual network adaptor 182, virtual RAM 183, and virtual CPU 184.

It should be recognised that the various layers and modules described with reference to Figure 3B are merely exemplary, and that other layers and modules may be used with the same functionality without departing from the scope of the invention. It should further be recognised that other virtualised computer architectures may be used, such as hosted virtual machines.

Turning to Figure 4A, an example user device 60 for communicating with the cloud computing environment 10 is shown. User device 60 may be embodied as any type of computer, including a server, a desktop computer, a laptop, a tablet, a mobile device, or the like. Components of user device 60 include, but are not limited to, a processor 611, such as a central processing unit (CPU), system memory 612, and system bus 613. System bus 613 provides communicative coupling for various components of userdevice 60, including system memory 612 and processor 611. Example system bus architectures include parallel buses, such as Peripheral Component Interconnect (PCI) and Integrated Drive Electronics (IDE), and serial buses, such as PCI Express (PCIe) and Serial ATA (SATA).

System memory 612 is formed of volatile and/or non-volatile memory such as read only memory (ROM) and random-access memory (RAM). ROM is typically used to store a basic input/output system (BIOS), which contains routines that boots the operating system and sets up the components of user device 60, for example at start-up. RAM is typically used to temporarily store data and/or program modules that the processor 611 is operating on.

User device 60 includes other forms of memory, including (computer readable) storage media 615, which is communicatively coupled to the processor 611 through a memory interface 614 and the system bus 613. Storage media 615 may be or may include volatile and/or non-volatile media. Storage media 615 may be or may include removable or non-removable storage media. Example storage media 615 technologies include: semiconductor memory, such as RAM, flash memory, solid-state drives (SSD); magnetic storage media, such as magnetic disks; and optical storage, such as hard disk drives (HDD) and CD, CD-ROM, DVD and BD-ROM. Data stored in storage medium 615 may be stored according to known methods of storing information such as program modules, data structures, or other data, the form of which is discussed further herein.

Various program modules are stored on the system memory 612 and/or storage media 615, including an operating system and one or more user applications. Such user applications may cause the user device 60 to interact with cloud computing environment 10. For instance, the user application may cause an event-driven application 135 to begin processing protected data on the cloud computing environment 10.

User device 60 is communicatively coupled to the cloud computing environment 10 via the at least one communication network, such as the Internet. Other communication networks may be used including a local area network (LAN) and/or a wide area network (WAN). Further communication networks may be present in various types of user device 60, such as mobile devices and tablets, to cellular networks, such as 3G, 4G LTE and 5G. User device 60 establishes communication through network interface 619.

User device 60 is communicatively coupled to a display device via a graphics/video interface 616 and system bus 613. In some instances, the display device may be an integrated display. A graphical processing unit (GPU) 626 may be used in addition to improve graphical and other types of processing. User device 60 also includes an input peripheral interface 617 and an output peripheral interface 618 that are communicatively coupled to the system bus 613. Input peripheral interface is communicatively coupled to one or more input devices, such as a keyboard, mouse or touchscreen, for interaction between the user device 60 and a user. Output peripheral interface 618 is communicatively coupled to one or more output devices, such as a speaker. When not integrated, the communicative coupling may be wired, such as via a universal serial bus (USB) port, or wireless, such as over Bluetooth.

Figure 4B depicts an example external provider system 40. The components of the external provider system 40 may be the same as those described above for user device 60. In particular, the external provider system 40 may comprise a system bus 413, processor41 1, system memory 412, memory interface 414, storage media 415, graphics/video interface 416, GPU 426, input peripheral interface 417, output peripheral interface 418 and network interface 419. In certain embodiments, the external provider system 40 may take the form of an enterprise server.

### Cloud Computing Environment Architecture

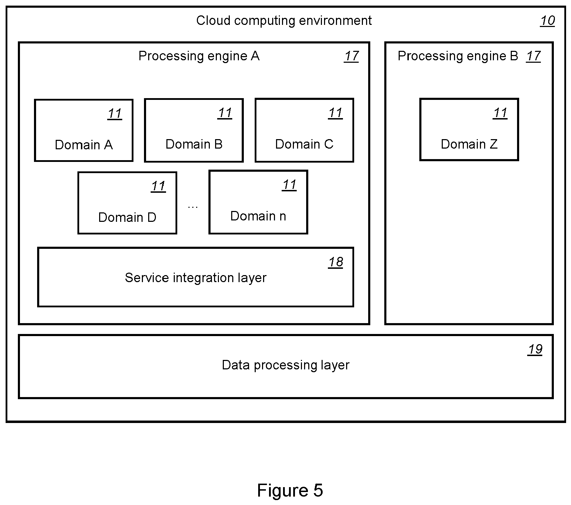

Figure 5 depicts an embodiment of cloud computing environment 10 architecture for implementing the present invention.

As shown in Figure 5, the cloud computing environment 10 contains one or more processing engines 17. Preferably, there are a plurality of processing engines 17. Figure 5 depicts two processing engines, processing engine A and processing engine B. Each processing engine 17 in the cloud computing environment 10 is a logical partition that is responsible for providing a particular processing function or subset of processing functions. Each processing engine 17 operates in an event-driven fashion. In other words, each processing engine 17 processes data as discrete event messages, and is able to support event-driven applications 135 of the type discussed with respect to Figure 3A and Figure 3B.

Each processing engine 17 has one or more domains 11. The domains 11 in a particular processing engine 17 provide security boundaries for protected data in the cloud computing environment 10. These domains may be separate and distinct within the cloud computing environment 10 allowing for the control of access to data based on different security levels. This separation of domains ensures that data is protected and only accessible by authorised users or applications. The domains 11 also modularise the particular processing function or subset of processing functions. Such modular architectures offer advantages such as scalability, reusability, and ease of maintenance by breaking the processing engine 17 down into smaller, interchangeable domains. Like the processing engines 17, each domain 11 processes data as discrete event messages and is therefore able to support event-driven applications 135 of the type discussed with respect to Figure 3A and Figure 3B. Moreover, each domain 11 may be implemented through serverless capabilities of the cloud computing environment 10. For example, when the cloud computing environment 10 is an AWS environment, such serverless capabilities may include Amazon DynamoDB, Amazon S3, AWS Lambda, AWS Step Functions, and Amazon API gateway. Optionally, each domain 17 may be composed of one or more sub domains.

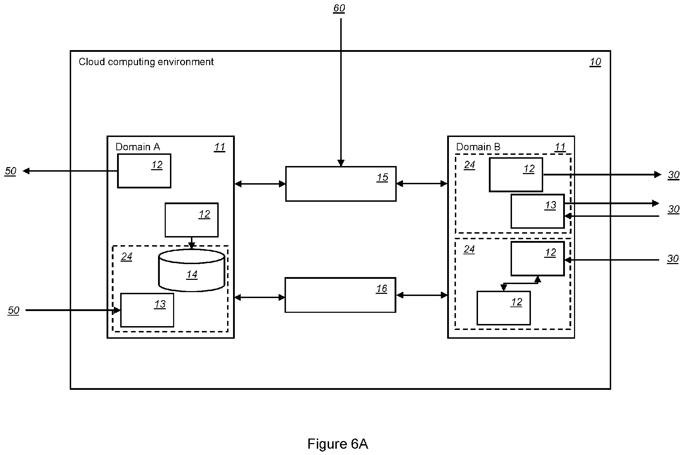

Referring briefly to Figure 6A, each domain 11 contains one or more processing modules 12. The processing modules 12 are event-driven and can be used within one or more event-driven applications 135. Put another way, the processing modules 12 are agnostic to the event-driven applications 135, and therefore may be combined with other components to easily create a new event-driven application 135. This flexibility enables the cloud computing environment 10 to adapt to changing requirements and support a wide range of event-driven applications 135. When the cloud computing environment 10 is an AWS environment, each of the processing modules 12 may be hosted on Amazon ECS (Container) running on EC2 or AWS Fargate.

In some examples, the domain 11 may include one or more data service application 13. Data service applications may be data streams that are configured to stream protected data. These data streams are event-driven and may have incoming and outgoing connections to various components within the cloud computing environment 10 and outside of the cloud computing environment 10. For instance, within the cloud computing environment 10, the data streams may be used to communicate data to and/or from one or more processing modules 12, one or more domains 11, one or more processing engines 17, one or more databases 14, and the like. Outside of the cloud computing environment 10, the data streams may be used to communicate with local server 20 and/or external provider systems 40. In an AWS environment, such data streams 13 may be provided by Amazon Kinesis, which is a particular type of scalable and durable real-time data streaming application, or another data streaming application such as Apache Kafka via Amazon Managed Streaming for Apache Kafka (MSK). Alternatively, one or more data service applications 13 may be message queues. In an AWS environment, such message queues 13 may be provided by Amazon Simple Queue Service (SQS). Further alternatively, a data service application may be any downstream application comprising an API endpoint.

Each domain 11 may also contain one or more domain databases 14. Domain databases 14 may be used for different reasons, such as to log event message processing occurring within the domain 11. In some examples, a database 14 is configured to store protected data. The database 14 may be a NoSQL database, such as DynamoDB, which provides a flexible and scalable approach for storing and managing data. The use of a NoSQL database 14 ensures that the cloud computing environment 10 can efficiently handle large volumes of data and support a wide range of applications.

The one or more processing modules 12, data service applications 13, and domain databases 14 work together to provide a scalable, secure, and efficient domain 11 for processing and managing protected data.

In some examples, the domain 11 may be sub-divided into one or more cloud-based accounts 24. Any one or more of the processing modules 12, data service applications 13 and domain databases 14 may be associated with a particular cloud-based account 24. Alternatively, it may be that none of the processing modules 12, data service applications 13 and domain databases 14 is associated with the particular cloud-based account 24. Domain 11 may comprise one or more processing modules 12, data service applications 13, and/or domain databases 14 that are not associated with any cloud-based account 24. For example, as shown in Figure 6A, domain A 11 comprises a single cloud-based account 24 with which data service application 13 (which, in this particular embodiment, is a data stream) and domain database 14 are associated. Also as shown in Figure 6A, domain B 11 comprises two cloud-based accounts 24. One of the processing modules 12 and the data service application 13 are associated with a first cloud-based account 24 of domain B 11, and the remaining two processing modules 12 are associated with a second cloud-based account 24 of domain B 11.

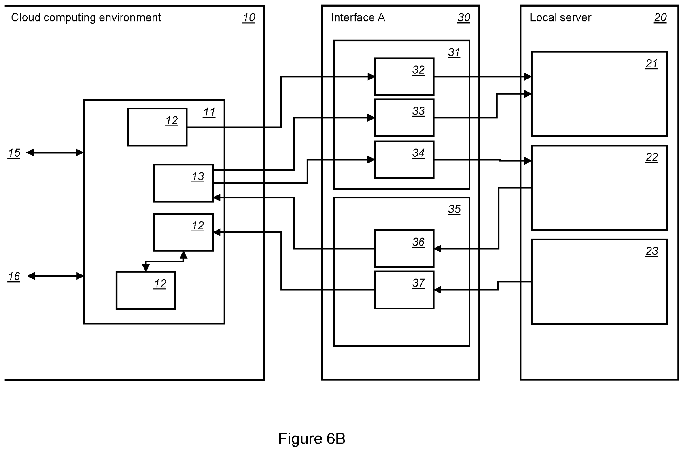

Referring back to Figure 5, processing engine 17 may contain a service integration layer 18. The service integration layer 18 is responsible for communications within the cloud computing environment 10 and/or with local server 20. In particular, the service integration layer 18 uses APIs and/or event message streaming patterns (as discussed with respect to Figure 6B) to enable standardisation and scaling for data between the processing engine 17 in the cloud computing environment 10 and the local server 20. Preferably, the service integration layer 18 includes an anti-corruption layer to facilitate integration between local server 20 (which does not support event-driven applications) and the cloud computing environment 10 (which does support event-driven applications) and vice versa. Additionally, the service integration layer 18 may be used to support communications within the cloud computing environment 10, for example between different domains 11. One or more push adapters may be used for these purposes, as further discussed herein.

In one particular consumer banking example, the cloud computing environment 10 is an AWS environment. In such an example, the cloud computing environment 10 includes at least two processing engines 17: processing engine A relating to financial product processing and processing engine B relating to application processing. Processing engine A 17 includes a plurality of domains 11, i.e. domains A, B, C, D... n. Such domains may include product management domains, primary domains, feature-driven domains and supplementary domains. Examples of primary domains include a payment processing domain, which manages real time account balances and supports user payment activity, and a transaction processing domain which relates to accounting and operational processing. Another example of a primary domain is an account operation domain, which controls how the execution of a process for an account is to be operated. Processing engine B includes one domain 11, i.e. domain Z. Such a domain may be an apply domain that is used so that a new or established user can apply to receive various resources (e.g. financial resources). The apply domain may also be used to on-board new users to the cloud computing environment 10.

Turning back to Figure 5, the cloud computing environment 10 also includes a data processing layer 19. The data processing layer 19 provides a common aggregation point for cloud computing environment 10 for providing data to various data platforms, for further analysis and/or manipulation.

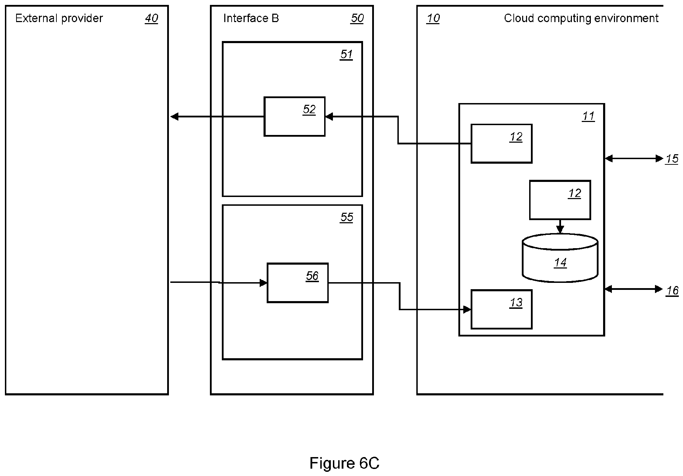

Figure 6A, Figure 6B and Figure 6C show example integration patterns of cloud computing environment 10 for implementing the invention. The integration patterns are a prescribed set of rules for connecting and coordinating different software components to and within the cloud computing environment 10. Such integration patterns particularly assist with data exchange, communication, and interoperability of various applications, including event-driven applications 135 and batch-driven applications. Figure 6A shows integration patterns within cloud computing environment 10 and from user device 60. Figure 6B depicts integration patterns between cloud computing environment 10 and local server 20, whilst Figure 6C shows integration patterns between cloud computing environment 10 and external provider system 40.

Referring first to Figure 6A, two integration patterns are shown. In particular, the cloud computing environment 10 is shown to include a first integration pattern, an inter-domain API (Application Programming Interface) 15. The inter-domain API 15 is configured to connect user devices 60 with one or more domains 11. This inter-domain API 15 allows user devices 60 to access and interact with the cloud computing environment 10, enabling users to, for example, call an application service API exposed by a domain 11 and/or access and manage their protected data securely and efficiently. In particular, this connection allows the user devices 60 to access and interact with the various processing modules 12, data service applications 13, and other components within the domains 11.

In some examples, the inter-domain API 15 may provide a secure and efficient communication channel between the user devices 60 and the cloud computing environment 10. This secure communication channel may be established using various security protocols, including HTTPS, and encryption techniques to ensure the confidentiality, integrity, and availability of the data being transmitted between the user devices 60 and the cloud computing environment 10. The inter-domain API 15 may also provide various functionalities and services to the user devices 60, such as authentication, authorisation, data retrieval, data manipulation, and other application-specific operations. By providing these functionalities and services, the inter-domain API 15 enables the user devices 60 to seamlessly interact with the cloud computing environment 10 and perform various tasks and operations within the hosted applications 135.

A second integration pattern, inter-domain message bridge 16, is also shown in Figure 6A. The inter-domain message bridge 16 is positioned between two (or more) domains, and allows event messages in one domain to be pushed or pulled to another domain. This inter-domain message bridge 16 enables efficient communication and data transfer between domains, ensuring that data is processed and managed securely and efficiently within the cloud computing environment 10. This is particularly advantageous in a cloud computing environment 10 that comprises a plurality of domains 11 with different security boundaries and data processing requirements.

The inter-domain message bridge 16 is designed to support event-driven communication between domains 11, which is a key aspect of the asynchronous event-driven applications 135 hosted within the cloud computing environment 10. By enabling event messages in one domain 11 to be pushed or pulled (or "published") to another domain 11 as needed, the inter-domain message bridge 16 ensures that the processing modules 12 within the domains 11 can efficiently handle and process the protected data in an event-driven manner. The inter-domain message bridge 16 may be configured to support different event message data formats, including NoSQL and JSON, to ensure compatibility with the various processing modules 12 and applications 135 within the cloud computing environment 10.

Reference is now made to Figure 6B, which depicts integration patterns between cloud computing environment 10 and local server 20. Figure 6B provides a more detailed view of the first interface module (interface module A) 30, which includes a first conversion module 31 and a second conversion module 35.

The first conversion module 31 is configured to handle outgoing data from the cloud computing environment 10 to the local server 20, and includes three integration patterns: outbound to local server API 32, fire and forget API 33, and a file batcher 34. The outbound to local server API 32 pattern is used where the local server 20 needs to consume real-time data from the cloud computing environment 10. Fire and forget API 33 is used where some of the event messages within the cloud computing environment 10 need to be published to the local server 20. File batcher 34 is used to collect event messages and consolidate the event messages into a scheduled batch file to provide to the local server 20.

The second conversion module 35 is configured to handle incoming data from the local server 20 to the cloud computing environment 10 and comprises two integration patterns: file debatcher 36 and inbound from local server API 37. File debatcher 36 is used to pass data from the local server, which is typically in the form of a batch file, to the cloud computing environment 10, which is event-driven. The inbound from local server API 37 is used where data is to be passed in real-time from the local server 20 to the cloud computing environment 10.

It is noted that, as shown in Figure 6B, local server 20 may comprise a plurality of partitions, such as a first partition 21, a second partition 22, and a third partition 23. These servers may be responsible for different tasks or functions related to the processing of protected data in synchronous batch-driven applications. Although three partitions are shown in Figure 6B, any number of partitions, including a single partition, may be present at local server 20.

Reference is now made to Figure 6C which shows integration patterns between cloud computing environment 10 and external provider system 40. In particular, Figure 6C provides further details of the second interface module (interface module B) 50, which includes a first conversion module 51 and a second conversion module 55. Each of the conversion modules in the second interface module 50 has its own integration pattern. In particular, the first conversion module 51 is responsible for sending protected data out to the external provider system 40 from the cloud computing environment 10, and therefore has an outbound to external provider API 52. The second conversion module 55 is responsible for receiving data from the external provider system 40 to the cloud computing environment 10, and therefore has an inbox to external provider API 56.

It should be appreciated that the architecture of cloud computing environment 10 of Figure 5 and the integration patterns of Figure 6A, Figure 6B and Figure 6C are merely exemplary. Other architectures and integration patterns may be used for implementing the invention.

### Push Adapter Overview

The capacity to move event messages is essential to event-driven architectures, particularly those event-driven architectures which are cloud-based, such as those implemented in the cloud computing environment 10 described with respect to Figure 2 to Figure 6C. Without this capability it would not be possible to construct an event-driven architecture in the cloud computing environment 10, as no event messages would be transmitted nor would any serverless functions be triggered by event messages. Both pulling and pushing event messages are key capabilities of event-driven architectures.

Pushing an event message refers to taking an event message produced by an upstream application or otherwise, and transferring this event message to one or more data service applications which may require the event message to initiate and/or continue computational processes (for example, using a downstream application). Pushing an event message may comprise any suitable form of sending the event message which enables the event message to be received by a data service application. This may include an Application Programming Interface (API) call via any suitable API protocol. However, preferably, pushing the event message comprises posting, publishing or otherwise storing the event message to one or more data service applications.

While any application, inclusive of those applications which generate event messages, may push one or more event messages to one or more data service application, a push adapter is referred to herein. A push adapter is a series of computer-executable commands configured such that event messages are input to the push adapter and these event messages are pushed by the push adapter to one or more data service applications. Preferably, the push adapter is implemented as a standalone application, such as an event-driven application 135, which is configured to intake event messages (for instance, from various other applications) and push these event messages to one or more data service applications. In this way, the push adapter can push event messages originating from a plurality of applications, thereby reducing the number of push adapters which are required to push event messages between applications within the cloud computing environment 10 and increasing computational and memory efficiency of the cloud computing environment 10 as a result. This decoupling of the push adapter from other applications in the cloud computing environment 10 also improves the security of the cloud computing environment 10 by limiting and centralising the capacity to push event messages, thereby making malicious and abnormal event messages easier to identify and improving the ease of making security-focussed adjustments to the pushing of event messages.

In some alternative embodiments, the push adapter may be appended to a pre-existing application 135 which generates and/or otherwise processes event messages which require pushing to one or more data service applications. In either embodiment, the push adapter may be dependent upon further applications 135 which are called for the execution of features of the push adapter.

Relative to the push adapter, certain applications executed by the cloud computing environment 10 may fall in two categories, upstream applications and downstream applications. Upstream applications are applications, such as event-driven applications 135, executed by the cloud computing environment 10 which provide, generate or otherwise assist in the provision or generation of event messages which are input to the push adapter. Conversely, downstream applications are applications, such as event-driven applications 135, to which event messages pushed by the push adapter are input. Downstream applications do not need to be direct recipients of event messages pushed from the push adapter, such as data service applications. However, the data service applications to which event messages are pushed by the push adapter may also be considered downstream applications. As an example, if the push adapter pushes an event message to a data service application, the event messages being read from the data service application by one or more event-driven applications 135, each of the one or more event driven applications which read the event message and the data service application are considered downstream applications. Upstream and downstream applications, as referred to herein, are therefore defined relative to each instance of the push adapter.

It is preferable for the push adapter to push events to data service applications. As defined herein, a data service application is an application configured to handle, manipulate, transmit store and/or otherwise respond to event messages. In the context of the present invention, data service applications process event messages for transfer to or retrieval by one or more other downstream applications. In some embodiments a data service application may be an event streaming application, such as Amazon Kinesis or Apache Kafka. Alternatively, a data service application may be a message queue application, such as Amazon SQS. If the data service application is an event streaming application, the data service application is preferably Amazon Kinesis. In other embodiments, the data service application may be any downstream application with an API endpoint. By pushing events to data service applications such as event streams or message queues, the push adapter can remain independent of many modifications and/or updates to downstream applications. In particular, if a new, modified or updated downstream application remains compatible with the data service application to which event messages are pushed by the push adapter, the push adapter will require no modification to remain compatible with the new, modified or updated downstream application if it is configured to push event messages to the data service application. This architecture therefore improves the modularity of the cloud computing environment 10 and reduces the maintenance overhead required to provide updates to applications in the cloud computing environment 10.

If a push adapter is implemented as a standalone application, it may be pragmatic to position the push adapter in various parts of a cloud computing environment 10 or otherwise. In one embodiment, as elaborated upon herein, the push adapter may be utilised in an interface module, such as interface module A 30 shown in Figure 6B, for pushing event messages generated by or generated based upon data from a local server 20 to one or more data service applications 13 in the cloud computing environment 10. In other words, the push adapter may form part of file debatcher 36 described with respect to Fig. 6B. Preferably, the push adapter forms part of the cloud computing environment 10. However, if interface module A 30 does not form part of cloud computing environment 10, the push adapter does not form part of the cloud computing environment 10. When the push adapter is implemented as part of an interface module, such as file debatcher 36 of interface module A 30, the push adapter may be configured to assist in the de-batching of data from a local server 20. In this way, data from a local server 20 which is not in event message format, can be converted into a plurality of event messages. The plurality of event messages generated from the local server data can then be pushed and propagated through the cloud computing environment 10 by the push adapter.

File debatchers can be designed and implemented in a number of ways which would take advantage of the capabilities of the push adapter, and the specific implementation of any file debatcher falls outside the scope of the present invention. However, for illustrative purposes, the file debatcher may comprise a file receiving component, a record filter and validation component, a splitter component and the push adapter as described herein. The receiving component is configured to receive a data file from a local server. The record filter and validation component may validate aspects of the data file, such as the integrity of the data file or the syntax of the received data file. Furthermore, the same or a different record filter and validation component may be used to validate event messages generated by the file debatcher before the event messages are provided to the push adapter. The splitter component converts the data file into one or more event messages and/or API (Application Programming Interface) calls. The API calls may be sent to one or more API endpoints by the splitter component upon generation of the API calls. The event messages generated by the splitter component may then store the generated event messages in a data repository for retrieval by the push adapter as described further herein. Different file debatchers may be implemented to handle different data file formats from the local server. For example, debatchers may be implemented for the following data file formats: binary, Unicode, fixed length, comma separated, pipe separated and/or any other data file format. File debatchers are not limited to receiving data files from local servers and may be used throughout the cloud computing environment 10 to separate data presented in a single file.

In another embodiment, the push adapter may be implemented in a domain 11, such as any of domains A to n and Z shown in Figure 5. In this embodiment, the push adapter may be configured to push event messages to data service applications 13 within the domain 11 in which it is implemented and/or to data service applications 13 in other domains 11. In other embodiments, the push adapter may be implemented in a service integration layer 18 of the cloud computing environment 10 shown in Figure 5. In this embodiment, the push adapter may be configured to push event messages to data service applications 13 in domains 11, such as any of domains A to n and Z. When the push adapter is implemented as part of a service integration layer 18 or in a domain 11, the push adapter is responsible from pushing events originating from one or more upstream applications to one or more data service applications. This renders the various applications in the cloud computing environment 10 interoperable, by allowing applications to execute processes in response to event messages generated by other applications.

A strength of the push adapter is that it is able to be implemented in the different scenarios mentioned above, with little impact on how the push adapter functions. In other words, push adapter is flexible and may be implemented in and around various components of the cloud computing environment 10. In some embodiments, one or more instances of the push adapter are implemented in the cloud computing environment 10. Such one or more instances may include different implementations, i.e. implementations in a file debatcher, in a domain 11, and/or as part of service integration layer 18. Additionally or alternatively, such one or more instances may include the same implementation in different locations of cloud computing environment 10, i.e. two different domains 11.

In the context of the push adapter, the terms "*first*", "*second*", etc. are used to delineate publication trigger signals, event types, mappings and/or any other suitable feature between executions of pushing event messages with the push adapter. A second feature may be identical to or different from the first of the same feature. For example, a first mapping and a second mapping may be the same mapping if the event type is the same for event messages relating to both mappings. Alternatively, if event messages related to the second mapping are of a different event type as others of those event messages related to the first mapping, the first mapping and the second mapping may be different mappings.

### Push Adapter Architecture

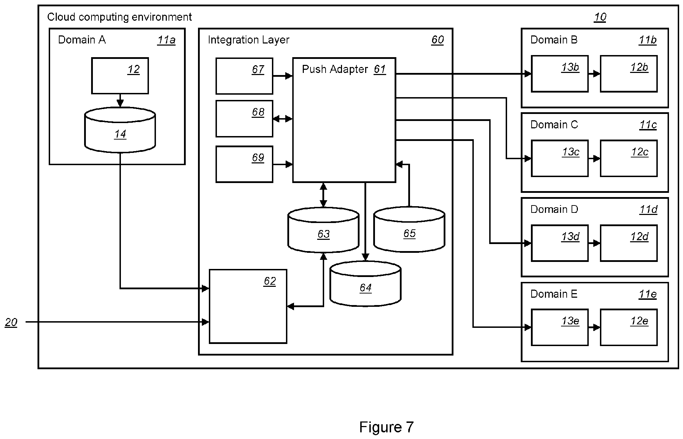

Turning to Figure 7, the cloud computing environment 10 is illustrated with a view of a push adapter 61. In the embodiment of Figure 7, the push adapter 61 is implemented within an integration layer 60. The integration layer within this embodiment may represent the service integration layer 18 (as shown in Figure 5), a portion of interface module A 30 or any other suitable region of cloud computing environment 10 where push adapter 61 may be implemented as described herein. Push adapter 61 may be similarly implemented outside cloud computing environment 10 (such as where the push adapter 61 forms part of interface module A 30 when it is not part of the cloud computing environment 10), however this scenario is not illustrated.

Push adapter 61 is persistently allocated memory and computational capacity, such as being implemented on a cloud-based virtual machine cluster. A cloud-based virtual machine cluster, as used herein, refers to one or more virtual machines of a cloud computing environment that operate in unison. The virtual machines 185 of servers 100 that form part of virtualisation environment 165 within cloud computing environment 10, as shown in Figure 3A and Figure 3B, are an example of a virtual machine cluster. Preferably, when the push adapter 61 is implemented within an AWS cloud computing environment, the cloud-based virtual machine cluster is implemented with Amazon EC2 as the virtualisation environment 165. In such implementations, each virtual machine may be an EC2 instance. In order for event messages to be input to push adapter 61, event messages are stored in an event storage database 63. Event storage database 63 is generally communicatively coupled with push adapter 61 such that push adapter 61 can at least read and amend data in event storage database 63. Event storage database 63 may be a domain database 14. Additionally or alternatively, more than one event storage database 63 may be communicatively coupled to push adapter 61. The event storage database 63 may be a relational database, such as an SQL database, or a non-relational database, such as a NoSQL database. If the event storage database is a relational database, it may be implemented as one of: an Amazon Aurora database, an Oracle database, a Microsoft SQL Server database, a MySQL database, a Postgre SQL database or a MariaDB database. If the event storage database is a non-relational database, it may be implemented as one of: an Amazon Dynamo DB database, a MongoDB database, an Amazon MemoryDB database, or an Amazon Neptune database. Preferably, event storage database 63 is a non-relational database. Further preferably, event storage database 63 is implemented as an Amazon Dynamo DB database.

Event storage database 63 may be populated with event messages and metadata associated with the event messages by an event generation application 62. The event generation application is configured to generate event messages which are to be pushed to one or more data service applications 13 by push adapter 61. For this reason, the event generation application 62 may be thought of as an upstream application. Similar to push adapter 61, event generation application 62 may be communicatively coupled with event storage database 63. However, event generation application 62 must also be able to create data, such as storing a new event message, in event storage database 63. Event generation application 62 may also read and, optionally, amend data in event storage database 63. Event generation application 62 may be an event-driven application 135. In some embodiments, the event generation application 62 is configured to access a domain such as domain A 11a either to receive data from a processing module 12 or application 135, or to retrieve data from a domain database 14. In this way, event generation application 62 may generate and or re-format events based on data from domain A 11a to send to one or more other domains. In other embodiments the processing module 12 or application 135 of domain A 11a may act as event generation application 62, by generating event messages and populating event storage database 63 with the generated event messages. In alternative embodiments, event generation application 62 may retrieve and/or receive data from local server 20, wherein the data received and/or retrieved may be in batch form. In this way, as described herein-above, the event generation application 62 may convert data from local servers (which do not utilise an event-driven architecture) to event messages suitable for processing within cloud computing environment 10. The exact functionality of the event generation application 62 falls outside the scope of push adapter 61, however the event generation application 62 may function identically to file debatcher 36 described herein. For example, event generation application 62 may be at least the splitter component of file debatcher 36.

Push adapter 61 is additionally communicatively coupled to one or more data service applications 13 in one or more domains 11 which event messages can be pushed to by push adapter 61. In Figure 7, push adapter 61 is shown to be communicatively coupled to four data service applications 13b to 13e, each of which is in a separate domain 11b to 11e, but this arrangement is purely illustrative. Push adapter 61 may be communicatively coupled to any number of data service applications 13 across any number of domains. Moreover, the push adapter 61 may be communicatively coupled to data service applications 13 which are in the integration layer 60 and/or a plurality of data service applications 13 in the same domain 11. Returning to Figure 7, four processing modules 12b to 12e are shown, each processing module being communicatively coupled to the respective data service application 13b to 13e for retrieving the event message(s) pushed thereto.

In some embodiments, integration layer 60 may further comprise a cloud-based signalling service 67 configured to trigger push adapter 61 to attempt to push one or more event messages stored in event storage database 63 to one or more data service applications 13. The cloud-based signalling service 67 is communicatively coupled to push adapter 61, such that a publication trigger signal can be sent from the cloud-based signalling service 67 to push adapter 61. In some embodiments, the cloud-based signalling service 67 is event-driven. Additionally or alternatively, cloud-based signalling service 67 may be implemented as a transient serverless application, such as an AWS Lambda function, which is only assigned computational resources and executed in response to specific stimuli, such as an event message. Additionally or alternatively, the cloud-based signalling service 67 may be communicatively coupled to event storage database 63 such that it can read data in event storage database 63. In other embodiments, the cloud-based signalling service 67 may form part of event generation application 62, or the cloud-based signalling service 67 may be executed by the cloud-based virtual machine cluster executing push adapter 61.

In some embodiments, integration layer 60 may comprise a mapping storage database 65, configured to store a plurality of mappings for retrieval by push adapter 61 based upon the event type of event messages being pushed by push adapter 61. The mapping storage database 65 may be a relational database, such as an SQL database, or a non-relational database, such as a NoSQL database. If the mapping storage database 65 is a relational database, it may be implemented as one of: an Amazon Aurora database, an Oracle database, a Microsoft SQL Server database, a MySQL database, a Postgre SQL database or a MariaDB database. If the mapping storage database 65 is a non-relational database, it may be implemented as one of: an Amazon Dynamo DB database, a MongoDB database, an Amazon MemoryDB database, or an Amazon Neptune database. Preferably the mapping storage database is a relational database and, further preferably, the mapping storage database is an Amazon Dynamo DB database. In other embodiments, the plurality of mappings may alternatively be stored as one or more configuration parameters for the push adapter. If the plurality of mappings are stored as configuration parameters, they may be persistently stored in configuration storage, such as AWS Systems Manager. For example, a list of the plurality of mappings may be one configuration parameter of push adapter 61. Alternatively, the plurality of variables may be stored as runtime execution variables.

In some embodiments, push adapter 61 may be required to decrypt a portion of an event message or the entirety of an event message prior to pushing the event message to one or more data service applications 13. Therefore, in order to affect decryption of event messages, the push adapter may be communicatively coupled to a cloud-based decryption service 68. Cloud-based decryption service 68 may be a transient serverless program, such as an AWS Lambda function. Alternatively, cloud-based decryption service 68 may be executed by the cloud-based virtual machine cluster, persistently or otherwise, at the same time as the push adapter 61. Cloud-based decryption service 68 may be called and/or otherwise initiated by push adapter 61 when decryption of an event message is required. In further embodiments, a plurality of cloud-based decryption services may be defined, each of which being suitable for decrypting a different event type of event message, wherein identifiers for the cloud-based decryption services are stored with mappings for the same event type or as one or more configuration parameters for push adapter 61.

In some embodiments, it may be beneficial for push adapter 61 to check whether event messages being pushed to one or more data service applications 13 by push adapter 61 are structured and formatted correctly. In other words, push adapter 61 may be delegated the responsibility for checking that the event messages adhere to a schema record for the event type of the event messages such that the event messages can be correctly read by all downstream applications. Each schema record identifies the correct formatting and syntax that event messages of an event type should adhere to. To affect the checking of event messages against one or more schema record, push adapter 61 may be communicatively coupled to one or more cloud-based registry service 69. The one or more cloud-based registry service 69 may form part of integration layer 60 or any domain 11 of the cloud computing environment 10. Alternatively, the one or more cloud-based registry service 69 may be centralised in the cloud computing environment 10 such that the cloud-based registry service 69 is accessible by a plurality of domains 11 and integration layer 60 without forming part of a domain 11 or integration layer 60. Generally, cloud-based registry service 69 is an AWS Glue registry if the cloud computing environment 10 is implemented using AWS. Cloud-based registry service 69 may be configured to store a plurality of schema records for event messages. Push adapter 61 may call cloud-based registry service 69 for the schema record for an event type and, based upon the schema record, push adapter 61 can compare one or more event messages to the schema record to validate whether the structure and/or formatting of the event messages is suitable for ingest by downstream applications.

In some embodiments, the push adapter 61 may generate reconciliation data after pushing one or more event messages to one or more data service applications 13. The reconciliation may be stored in a data repository, such as domain database 64. The domain database 64 may be a relational database, such as an SQL database, or a non-relational database, such as a NoSQL database. If domain database 64 is a relational database, it may be implemented as one of: an Amazon Aurora database, an Oracle database, a Microsoft SQL Server database, a MySQL database, a Postgre SQL database or a MariaDB database. If domain database 64 is a non-relational database, it may be implemented as one of: an Amazon Dynamo DB database, a MongoDB database, an Amazon MemoryDB database, or an Amazon Neptune database. Preferably, domain database 64 is an Amazon S3 bucket if the cloud computing environment 10 is implemented using AWS.

In further embodiments, push adapter 61 may be monitored by a cloud-based compliance service (not pictured), configured to identify when event messages fail to be pushed to one or more data service applications 13 and notify one or more administrators of integration layer 60 and/or cloud computing environment 10. Generally, if the cloud computing environment 10 is implemented using AWS, the cloud-based compliance service is implemented using Amazon Cloud Watch.

### Push Adapter: Pushing Event Messages

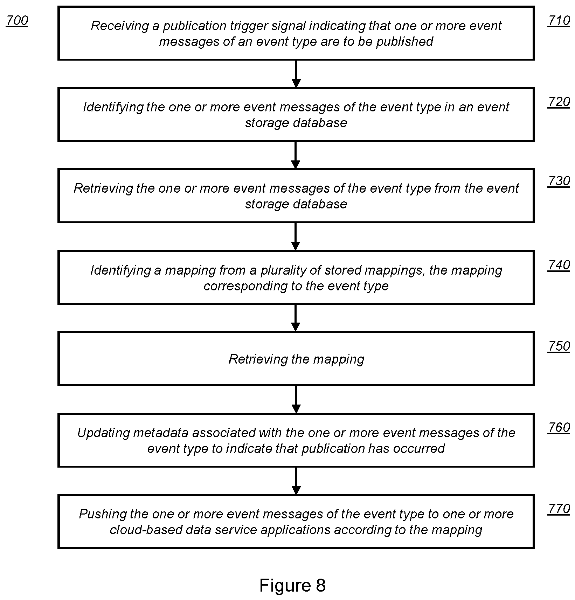

Figure 8 shows a flow chart illustrating the method 700 executed by the push adapter (i.e. the push adapter 61 described with respect to Figure 7) to push one or more event messages to one or more data service applications, such as data service application 13 and/or data service applications 13b-13e.

At step 710, the push adapter 61 and/or cloud-based virtual machine cluster executing the push adapter receive a publication trigger signal indicating that one or more event messages of an event type are to be published.

As defined herein above, event messages are data packets corresponding to events which have occurred. Information regarding these events is required by downstream applications as input to or to trigger initiation of the execution of processes. For the push adapter 61, those event messages which are to be pushed to one or more data service applications 13 are stored in an event storage database (i.e., event storage database 63 of Figure 7). Each event message may be stored within a data structure which also comprises metadata associated with the event. The metadata associated with each event message may comprise at least an event type. In addition, the metadata associated with each event message may comprise one or more of: a database event message identifier, an event posting timestamp, an integration layer event message identifier, a raw event data packet, a raw event name, an event message identifier, a correlation identifier, retry count data, message status data and/or a processing timestamp.

An event type is a metadata element associated with each event message based upon the content of the event message. Generally, each event message with the same purpose will share a structure and formatting such that the event message can be read by downstream systems. Event messages with the same purpose are also generally required to be received at a predefined set of data service applications 13 to initiate processes, be transmitted to additional downstream applications and/or otherwise be used as inputs for processing tasks performed by downstream applications. Therefore, based upon the purpose of event messages (and, by extension the structure, formatting and general informational content of the event messages), event messages can be grouped into event types, where each event type should be consistently pushed to at least one data service application 13.

The database event message identifier may be a data identifier for each event message and its associated metadata within the event storage database 63. The event posting timestamp may be a timestamp recording the time at which the event message was first posted to the event storage database 63. The integration layer event message identifier may be an identifier specific to each event message for recognition and use by components of and applications within the integration layer 60. The raw event data packet may comprise any data used to generate the event message. The event message identifier may be a data identifier specific to the event message, the event message identifier being used by applications across cloud computing environment 10. In some embodiments the event message identifier is comprised in the event message. A correlation identifier may be an identifier shared or related to other correlation identifiers which are part of correlated event messages. For example, event messages which form part of the same process will be allocated the same correlation identifier so that interrelated event messages can be identified. The processing timestamp may be a timestamp provided by the push adapter 61 indicating when the event message was pushed, or in some cases, where an attempt was made to push an event message to one or more data service applications 13.

The message status data may be data, such as a string or other suitable format of data, associated with the push adapter 61 status for each event message. The message status data is amendable by the push adapter 61 and/or one or more upstream applications. The message status data is configured to indicate the current progress of pushing the event message using the push adapter 61 (and, optionally, generating the event message). When an event message is first stored in the event storage database 63 an unready status may be set for the message status data of the event message. The unready status indicates that the event message should not be processed by the push adapter 61 despite the event message not having been processed yet. Once the event message is ready to be processed by the push adapter 61, the message status data may be changed to a ready-to-publish status by an upstream application. The ready-to-publish status indicates that the event message associated with this status has not yet been processed by the push adapter 61 but that this processing by the push adapter 61 can occur.

The publication trigger signal is the data packet which, upon receipt at the push adapter 61 and/or cloud-based virtual machine cluster, initiates push adapter 61 performing the remaining steps of method 700 (i.e. steps 720 to 770). The publication trigger signal may take any form suitable for enabling push adapter 61 to proceed with at least step 720. As defined herein above, the publication trigger signal may be generated by a variety of trigger signal sources including: the push adapter 61, a cloud-based signalling service 67 and/or an upstream application. In some embodiments, the push adapter 61 may respond to more than one publication signal from the same and/or different trigger signal sources. In other embodiments, the push adapter 61 may be configured to respond to only one type of and/or source of publication trigger signal.

The publication trigger signal may be generated in response to detection of one or more ready-to-publish statuses associated with event messages in the event storage database 63. The ready-to-publish statuses may be detected at the virtual machine cluster, which then generates the publication trigger signal to initiate processing of the event messages associated with the ready-to-publish statuses. In general, detection of the ready-to-publish statuses may be achieved through polling message status data by the virtual machine cluster which executes the push adapter 61. The event storage database 63 may be polled at regular intervals, such as 0.001 seconds, 0.01 seconds, 0.1 seconds, 1 second, 5 seconds, 10 seconds, 30 seconds, 1 minute, 5 minutes, 10 minutes, 30 minutes, 1 hour or any other suitable time interval. If the event storage database 63 is an Amazon DynamoDB database, changes to the event storage database 63 may be posted on a DynamoDB event stream as database event messages. In this case, the virtual machine cluster may subscribe to the DynamoDB event stream and retrieve database event messages associated with one or more message statuses being set to a ready-to-publish status.

Additionally or alternatively, the publication trigger signal may be generated at a predetermined time, such that one or more event messages with ready-to-publish statuses are processed by the push adapter 61 in response to the publication trigger signal generated at the predetermined time. Generally, the publication trigger signal is generated by a cloud-based signalling service 67 in this implementation of the publication trigger signal. The predetermined time may recur. In some embodiments, the predetermined time recurs aperiodically. In other embodiments, the predetermined time is reached at a periodic interval, such as every 1 second, 5 seconds, 10 seconds, 30 seconds, 1 minute, 5 minutes, 10 minutes, 30 minutes, 1 hour or any other suitable periodic interval.

Additionally or alternatively, the publication trigger signal may be generated by an upstream application. Generally, this is the way in which the publication trigger signal is generated as it facilitates on-demand pushing of event messages. For example, once an upstream application has stored one or more event messages in the event storage database 63 and these event messages are associated with ready-to-publish statuses, the upstream application may generate a publication trigger signal. Even if the event storage database 63 is being polled and or publication trigger signals are generated at a predetermined recurring time, it may be beneficial for the upstream application to generate the publication trigger signal such that the event messages are pushed to one or more data service applications 13 more quickly than waiting for another application to identify the ready-to-publish statuses or for a predetermined time to be reached. As an example, the event generation application 62 or the processing module 12 of domain A 11a in Figure 7 may generate the publication trigger signal.

Once generated, the publication trigger signal can be sent to the push adapter 61 by any appropriate means. Receipt of the publication trigger signal initiates the push adapter 61 and causes the push adapter 61 to proceed with steps 720 onwards to identify, retrieve and thereon push event messages to one or more data service applications 13.

At step 720, push adapter 61 identifies the one or more event messages in an event storage database 63. Generally, the push adapter 61 will identify only event messages with a ready-to-publish status or a retry eligible status. For example, the push adapter 61 may identify one or more event messages of a first event type. Additionally, the push adapter 61 may identify any number of other event messages with any number of different event types to the first event type. In other words, the publication trigger signal does not specify an event type of event message which should be identified by the push adapter. However, as discussed further herein, if a mapping is not provided for an event type of event message, event messages corresponding to the event type with no mapping will not be pushed by the push adapter. Event messages which have message status data which is not a ready-to-publish status or a retry eligible status are not identified by the push adapter 61 for processing.

At step 730, push adapter 61 retrieves the one or more identified event messages from the event storage database 63. Generally, the event messages are not removed from the event storage database 63, by deletion or otherwise, when they are retrieved by the push adapter 61. Therefore, retrieving event messages from the event storage database 63 in this context generally requires copying the identified event messages to transient storage for processing by the push adapter 61.

At step 740, push adapter 61 identifies a mapping from a plurality of stored mappings, the mapping corresponding to the first event type. If the identified event messages also comprise event messages with event types different to the first event type, mappings for each event type of identified event message will be identified and the same process used for the first event type will be followed for other event types of identified event messages. However, for simplicity, it is assumed herein that only event messages of the first event type are identified. Generally, the plurality of mappings are stored in a mapping storage database, such as mapping storage database 65. For each event type which may be pushed by the push adapter 61, there is generally only one mapping. In other words, each event type has a corresponding mapping. Each mapping is a data file which identifies an event type and at least one data service application 13 which event messages of the event type should be pushed to by the push adapter 61. Therefore, each mapping effectively maps an event type to at least one target data service application 13 where event messages of the given event type should be pushed to at step 740. The mapping associated with the first event type is identified based upon the event type of the one or more event messages.

At step 750, the mapping associated with the first event type is retrieved from the plurality of stored mappings. In this way the correct data service application(s) 13, which the event message should be sent to according to its event type, are identified by the push adapter 61, thereby allowing the push adapter 61 to later push the event message to the correct destination data service application(s) 13 according to the identified mapping.

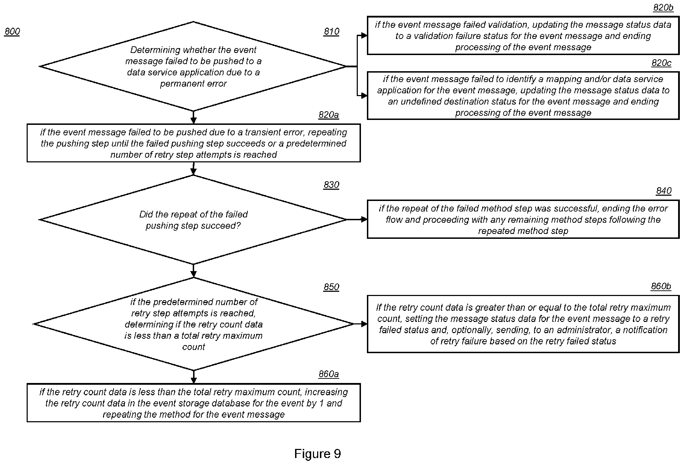

If no mapping can be identified that corresponds to the event type indicator for an event message and/or if no data service application 13 for pushing the event messages to is identified by the mapping, the method may be stopped, and an error flow may be initiated as described further herein with respect to Figure 9. In other embodiments, no error flow is provided and the method may stop and, optionally, send or store (to any appropriate domain database 14 or other datastore of cloud computing environment 10) an error message.

In some embodiments, if a mapping corresponding to the event type indicator for an event message can be identified and retrieved such that at least one data service application 13 which the event message should be pushed to can be identified, it may be checked whether decryption of part or all of the event message is required. To check whether decryption of an event message is required, generally the push adapter 61 will check its own configuration parameters for a defined decryption configuration parameter. In some embodiments, the decryption configuration parameter may indicate that all event messages being pushed by the push adapter 61 should be entirely decrypted. In other embodiments, the decryption configuration parameter may limit the decryption of event messages in any number of ways. For example, the decryption configuration parameter may limit decryption of event messages to one or more of; event messages corresponding to certain event type indicators; event messages being sent to a specific data service application 13 and/or part of an event message. If only part of an event message is to be decrypted according to the decryption configuration parameter, the resulting decryption will generate a partially decrypted event message. If the event message is intended to be pushed to more than one data service application 13 according to the identified mapping for the event message, the event message may be decrypted differently for each data service application 13. In further embodiments, there may be more than one decryption configuration parameter. The decryption configuration parameter may be stored separately from push adapter 61. For example, a decryption configuration parameter may form part of the metadata associated with each event message or a decryption configuration parameter may be associated with each event message schema.

If decryption is required, the push adapter 61 will send the parts of the event message to be decrypted to the cloud-based decryption service 68. The cloud-based decryption service 68 will initialise (if it is not already running) and execute decryption of the parts of the event message provided to the cloud-based decryption service 68 by the push adapter 61. After the parts of the event message have been decrypted, the decrypted parts of the event message will be sent to push adapter 61 such that push adapter 61 can reconstitute a partially decrypted event message (if a decrypted event message is not received from cloud-based decryption service 68) and continue the method with the partially or fully decrypted event message. If one or more parts of an event message cannot be decrypted by cloud-based decryption service 68, the method may be stopped for the event message, and an error flow (as described herein with respect to Figure 9) may be executed.

In some embodiments, the event message schema may also be validated. Generally, the event message schema validation occurs after all necessary modifications have been made to an event message so that changes which may alter the event message schema do not occur after validation. Therefore, if the event message is decrypted in part or as a whole, this should occur prior to event message schema validation.

In general, if push adapter 61 is configured to check that event messages being pushed adhere to a schema record, push adapter 61 will request and receive the schema record according to the event type indicator for the event message from cloud-based registry service 69. Push adapter 61 can then compare the event message to the received schema record to validate whether the structure and/or formatting of the event message matches the schema record. If push adapter is configured to validate event message schemas and either a schema record is not identified for the event type indicator corresponding to an event message or the event message structure and/or formatting does not match the received schema record, the method may stop for the event message and an error flow (as described herein with respect to Figure 9) may be executed. If the event message matches the structure and/or formatting of the schema record, the method proceeds to step 760.

Steps 760 and 770 generally occur at the same time, though these steps may occur in any order. At step 760, metadata associated with the one or more event messages of the event type is updated to indicate that publication has occurred. In some embodiments, updating the metadata associated with the one or more event messages comprises setting the event message status data to a published status if step 770 occurs successfully. The published status indicates that the event message to which it corresponds has been successfully pushed to the relevant data service applications 13. Additionally or alternatively, a processing timestamp may be set to the time at which step 770 executes. Further additionally or alternatively, immediately before the event message is pushed to one or more data service applications 13 at step 770, a publication timestamp header of the event message may be set to the present time.

At step 770, the one or more event messages of the first event type are pushed to one or more cloud-based data service applications 13 according to the mapping. In other words, based upon the one or more data service applications 13 identified in the retrieved mapping for one or more event messages, the push adapter 61 posts or otherwise pushes the event message(s) to the data service applications 13. Generally, where the data service applications 13 are event streams and/or message queues, the push adapter 61 will post the event message(s) to the data service applications 13. If cloud computing environment 10 is an AWS environment, the push adapter 61 may assume a producer role suitable for posting event messages to the data service applications 13. While it is beyond the scope of the invention to specify how each possible data service application 13 functions, generally a response will be provided to push adapter 61 that an event message has been successfully pushed to the data service application 13 so that the push adapter does not retry pushing the event message to the data service application 13.

### Push Adapter: Error Flows

Error flows referred to herein may be the same error flow, i.e. a single error flow being intended to handle failures in any of the steps of the method 700 of Figure 8 with an appropriate action suitable for retrying the step and/or labelling the error. An exemplary implementation of error flow 800 is illustrated in the flow chart of Figure 9. Generally, the error flow is executed by the push adapter 61.

At step 810 of the error flow, it is assessed whether the error which resulted in the execution of the error flow is a permanent error or a transient error. Permanent errors are errors which cannot be fixed by retrying any step of the method 700 of Figure 8 of the push adapter 61. Transient errors are errors which could be caused by a transient circumstance which means that retrying pushing the event message with the push adapter 61 may result in the event message being successfully pushed to one or more data service applications 13. As an example, if the error flow was executed in response to validation of an event message against a schema record failing, the error would be a permanent error. In the event of the error, which causes execution of the error flow, being failure to validate an event message against a schema record, the error flow may proceed to step 820b. At step 820b, the message status data is set to a validation failure status and the error flow stops. Additionally, failure to identify a mapping and/or data service application 13 for an event message is considered a permanent error. At step 820c, if a mapping cannot be identified or at least one data service application 13 cannot be identified from an identified mapping, message status data for the event messages corresponding to this error may be set to undefined destination statuses and the error flow stops. Any error which cannot have resulted from a transient circumstance, and therefore cannot be rectified by retrying pushing the event message, should be identified at this stage.

In some embodiments, particularly where the data service application 13 is an event stream or message queue such as Amazon Kinesis (so that the Kinesis Producer Library can be utilised by the push adapter 61), failure on pushing an event message can be rectified by retrying to push the event message during the error flow. For example, any event message attempting to be pushed to a data service application 13 may be temporarily stored in an event message buffer. If pushing the event message fails, the event message may be attempted to be pushed to the one or more data service applications 13 again based upon the copy of the event message in the event message buffer. At step 820a, where it has been established that the error flow is not executed in response to a permanent error, the error flow may retry pushing the event message(s) from the event message buffer in this way. The maximum number of times that retrying pushing the event message to the one or more data service applications 13 is allowed may be set when configuring the push adapter 61 or may be limited by the data service application 13. For example, the configuration parameters of push adapter 61 may comprise a predetermined number of retry step attempts which defines the number of times an event message should be attempted to be pushed to a data service application 13 from the event message buffer. The predetermined number of retry step attempts may be set to, for example, 1, 2, 5 or 10 retries. If the error preventing the pushing of one or more event messages to a data service application 13 is not transient, retrying pushing the event messages in this way may not be possible. For example, retrying to push an event message from the event message buffer may not be utilised if the data service application 13 cannot be located or if the data service application 13 is non-responsive.

At step 830 of the error flow, it is determined whether retrying pushing one or more event messages from the event message buffer is successful. If retrying pushing one or more event messages from the event message buffer is successful, the error flow ends for these event messages at step 840 and these event messages and/or the metadata associated with these event messages may be subject to one or more of the modifications listed in respect of step 760. If retrying pushing the event message to the one or more data service applications 13 is not successful, the error flow proceeds to step 850. For completeness, in other embodiments, any of the steps of push adapter may be retried in a similar manner to the retry for the pushing step described herein-above.

At step 850, retry count data associated with the event message is compared to a total retry maximum count. If the retry count data is less than the total retry maximum count, the error flow proceeds to step 860a where the message status data may be set to a retry eligible status and the processing timestamp may be set to the time at which the retry eligible status was set. In addition, the retry count data associated with the event message should be increased by 1.

The total maximum retry count serves as an upper limit to prevent push adapter 61 from perpetually re-attempting to push event messages which have already been attempted to be pushed to one or more data service applications 13 on more than one occasion. The total maximum retry count serves to limit the number of times push adapter can retry pushing an event message starting from the beginning of the process executed by the push adapter. Conversely, the predetermined number of retry step attempts serves to limit the number of times a step can be repeated for an event message in one execution of the process of the push adapter. Generally, the buffer retry maximum is used to retry the final step of pushing the event message to a data service application. The total maximum retry count may be a single integer value stored in the configuration parameters for push adapter 61. In other embodiments, the total maximum retry count can be stored in any datastore accessible by push adapter 61. Additionally or alternatively, there may be more than one total maximum retry count. For example, a total maximum retry count may be associated with each event type identifier or a total maximum retry count may be stored in the metadata associated with each event message.

A retry eligible status may function identically to a ready-to-publish status, such that event messages associated with retry eligible statuses may be retrieved, alone or at the same time as event messages with ready-to-publish statuses, and can be attempted to be pushed to one or more data service applications 13 by the push adapter 61. In other words, event messages with a retry eligible status will be re-attempted to be pushed to one or more data service applications 13 by the push adapter 61 in the same way as event messages with ready-to-publish statuses which have not previously attempted to be pushed by push adapter 61. For example, the method 700 may be repeated such that one or more of the one or more event messages is associated with a retry eligible status.

If the retry count data associated with the event message is increased such that it exceeds the total maximum retry count, the error flow proceeds to step 860b. At step 860b, the message status data is set to a retry failed status and the error flow is ended. As step 860b is the result of all retry strategies being exhausted for failing to push an event message which is not obviously the result of a permanent error, a notification of retry failure may be sent to an administrator at step 860b.

Irrespective of whether an error flow is executed for any or all of the event messages, in some embodiments, reconciliation data may be generated for the one or more event messages which push adapter 61 attempted to push to the one or more data service applications 13. Generally, the reconciliation data is a JSON file comprising at least a process completion timestamp indicating the time at which processing ceased for attempting to push every event message of the one or more event messages. In addition, the reconciliation data may comprise two further sets of data, a set of process details and a failed event list. The set of process details may comprise one or more of: a total event count indicator indicating the total number of the one or more event messages; a processed event count indicator indicating the total number of event messages associated with a published status after processing by push adapter 61; a failed event count indicator indicating the total number of event messages associated with an undefined destination, validation failure or retry failed message status after processing by push adapter 61; and/or a retry eligible count indicator indicating the total number of event messages associated with a retry eligible status after processing by push adapter 61. In some embodiments, the reconciliation data comprises only a reduced set of process details, the reduced set of process details comprising the total event count indicator, the processed event count indicator and the failed event count indicator. The failed event list may be a list comprising the event type indicator, the event message identifier and the message status of each event with an undefined destination, validation failure or retry failed status after processing by push adapter 61.

In general, reconciliation data is useful for reviewing the efficiency of a push adapter 61 and for acting as a single source of truth for tracing the root cause of errors in downstream applications. However, reconciliation data may not be persistently monitored. In some embodiments, to provide oversight of errors in push adapter 61, a cloud-based compliance service such as Amazon Cloud Watch may be implemented to monitor push adapter 61. The cloud-based compliance service may generate administration data suitable for review by an administrator, the administration data reflecting at least any errors resulting from within push adapter 61. The administration data may be regularly provided to the administrator for push adapter 61.

### General

The invention can take the form of an entirely hardware embodiment, an entirely software embodiment or an embodiment containing both hardware and software elements. In a preferred embodiment, the invention is implemented in software.

Furthermore, the invention can take the form of a computer program embodied as a computer-readable medium having computer executable code for use by or in connection with a computer. For the purposes of this description, a computer readable medium can be any tangible apparatus that can contain, store, communicate, propagate, or transport the program for use by or in connection with the computer. Moreover, a computer-readable medium can be an electronic, magnetic, optical, electromagnetic, infrared, or semiconductor system (or apparatus or device) or a propagation medium. Examples of a computer-readable medium include a semiconductor or solid state memory, magnetic tape, a removable computer diskette, a random access memory (RAM), a read-only memory (ROM), a rigid magnetic disk and an optical disk. Current examples of optical disks include compact disk-read only memory (CD-ROM), compact disk-read/write (CD-R/W) and DVD.

The flow diagrams in the figures illustrate the architecture, functionality, and operation of possible implementations of the methods of the invention. In some alternative implementations, the steps noted in the figures may occur out of the order noted in the figures. For example, two steps shown in succession may, in fact, be performed substantially concurrently, or the blocks may sometimes be performed in the reverse order, depending upon the functionality involved.

It will be understood that the above description of is given by way of example only and that various modifications may be made by those skilled in the art. Although various embodiments have been described above with a certain degree of particularity, or with reference to one or more individual embodiments, those skilled in the art could make numerous alterations to the disclosed embodiments without departing from the scope of this invention.

### Embodiments

The following list provides embodiments of the invention and forms part of the description. These embodiments can be combined in any compatible combination beyond those expressly stated. The embodiments can also be combined with any compatible features described herein:
1. A computer-implemented method for pushing one or more event messages to one or more cloud-based data service applications, the method comprising:
   receiving, at a cloud-based virtual machine cluster, a first publication trigger signal indicating that one or more event messages of a first event type are to be published, wherein the one or more event messages of the first event type are stored in an event storage database;
   identifying, by the cloud-based virtual machine cluster, the one or more event messages of the first event type in the event storage database;
   retrieving, by the cloud-based virtual machine cluster, the one or more event messages of the first event type from the event storage database;
   identifying, by the cloud-based virtual machine cluster, a first mapping from a plurality of stored mappings, the first mapping corresponding to the first event type;
   retrieving, by the cloud-based virtual machine cluster, the first mapping;
   updating, by the cloud-based virtual machine cluster, metadata associated with the one or more event messages of the first event type to indicate that publication has occurred; and
   pushing, by the cloud-based virtual machine cluster, the one or more event messages of the first event type to one or more cloud-based data service applications according to the first mapping.
2. The method of embodiment 1, wherein the event storage database is populated with event messages by an event generation application.
3. The method of embodiment 1 or embodiment 2, wherein the event storage database further comprises message status data for each of the one or more event messages of the first event type.
4. The method of embodiment 3, wherein, when a new event message stored in the event storage database is not ready to be processed by the cloud-based virtual machine cluster for the first time, an unready status is set in the message status data of the new event message.
5. The method of embodiment 3 or embodiment 4, wherein, when an event message stored in the event storage database is ready to be processed by the cloud-based virtual machine cluster, a ready-to-publish status is set in the message status data of the event message.
6. The method of embodiment 4 or embodiment 5 when dependent upon embodiment 2, wherein the unready status and/or ready-to-publish status are set by the event generation application.
7. The method of embodiment 5 or embodiment 6, wherein identifying the one or more event messages of the first event type in the event storage database is based on identifying event messages of the first event type with message status data comprising ready-to-publish statuses.
8. The method of any preceding embodiment, further comprising:
   generating, by a cloud-based signalling service, the first publication trigger signal; and
   sending, from the cloud-based signalling service to the cloud-based virtual machine cluster, the first publication trigger signal when a predetermined time is reached;
   wherein optionally, the first publication trigger signal indicates more than one event messages to be published.
9. The method of embodiment 8, wherein the predetermined time is reached at a periodic interval, such as every 1 second, 5 seconds, 10 seconds, 30 seconds, 1 minute, 5 minutes, 10 minutes, 30 minutes or 1 hour.
10. The method of embodiment 8, wherein the predetermined time may recur aperiodically.
11. The method of any of embodiment 3 to embodiment 7, further comprising:
   identifying, by a cloud-based signalling service, ready-to-publish statuses in the message status data of the one or more event messages;
   generating, by the cloud-based signalling service, the first publication trigger signal in response to the one or more identified ready-to-publish statuses; and
   sending, from the cloud-based signalling service to the cloud-based virtual machine cluster, the first publication trigger signal;
   wherein optionally, the first publication trigger signal indicates one event message to be published.
12. The method of any of embodiment 8 to embodiment 11, wherein the cloud-based signalling service is a transient serverless application.
13. The method of embodiment 12, wherein the cloud-based signalling service is implemented as an AWS lambda function.
14. The method of embodiment 11, wherein the cloud-based signalling service is executed by the cloud-based virtual machine cluster.
15. The method of embodiment 11 when dependent upon embodiment 2, wherein the cloud-based signalling service forms part of the event generation application.
16. The method of any of embodiment 3 to embodiment 7, further comprising:
   identifying, by the cloud-based virtual machine cluster, ready-to-publish statuses in the message status data of the one or more event messages of the first event type;
   generating, by the cloud-based virtual machine cluster, the first publication trigger signal in response to the one or more identified ready-to-publish statuses.
17. The method of embodiment 16, wherein identifying ready-to-publish statuses further comprises:
   polling, by the cloud-based virtual machine cluster, the event storage database for ready-to-publish statuses in the message status data of the one or more event messages of the first event type.
18. The method of embodiment 17, wherein the cloud-based virtual machine cluster polls the event storage database for ready-to-publish statuses at regular intervals.
19. The method of any preceding embodiment, further comprising:
   setting, by the cloud-based virtual machine cluster, the message status data for each of the one or more event messages of the first event type to a published status after pushing the one or more event messages to the one or more cloud-based data service applications according to the first mapping.
20. The method of any preceding embodiment, wherein, if the first mapping corresponding to the first event type cannot be identified, the method further comprises:
   processing, by the cloud-based virtual machine cluster, an error flow in response to failing to identify a first mapping corresponding to the first event type.
21. The method of embodiment 20, further comprising:
   setting, by the cloud-based virtual machine cluster, the message status data for the one or more events to undefined destination statuses.
22. The method of any preceding embodiment, further comprising:
   assessing, by the cloud-based virtual machine cluster, whether an event message schema of one or more event messages of the first event type needs to be validated.
23. The method of embodiment 22, wherein if the event message schema of the first event type needs to be validated, the method further comprises:
   validating, by a cloud-based registry service, the event message schema for each of the one or more event messages of the first event type against schema records stored in the cloud-based registry service.
24. The method of embodiment 23, wherein, if an event message fails validation against the schema records stored in the cloud-based registry service, the method further comprises:
   processing, by the cloud-based virtual machine cluster, an error flow corresponding to the event message which failed validation against the schema records stored in the cloud-based registry service.
25. The method of embodiment 23 or embodiment 24, wherein the cloud-based registry service is an AWS GLUE registry.
26. The method of any of embodiments 23, 24 or 25, wherein the error flow comprises the steps of:
   determining, by the cloud-based virtual machine cluster, if the event message failed validation and if a mapping was identified for the event message; and
   if the event message passed validation and if a mapping was identified for the event message, repeating the failed method step until the failed method step succeeds or a total retry maximum count is reached.
27. The method of embodiment 26, wherein if the predetermined number of retry step attempts is reached, the error flow further comprises:
   determining if the retry count data is less than a total retry maximum count;
   if the retry count data is less than the predetermined number of retry push attempts, setting, by the cloud-based virtual machine cluster, the message status data for the event message to a retry eligible status;
   identifying, by the cloud-based virtual machine cluster, the event messages with the retry eligible status in the event storage database;
   retrieving, by the cloud-based virtual machine cluster, the event message with the retry eligible status from the event storage database;
   identifying, by the cloud-based virtual machine cluster, a mapping from the plurality of stored mappings, the mapping corresponding to the event type of the event with the retry eligible status;
   retrieving, by the cloud-based virtual machine cluster, the mapping;
   updating, by the cloud-based virtual machine cluster, metadata associated with the event message to indicate that publication has occurred;
   attempting to push, by the cloud-based virtual machine cluster, the event message with the retry eligible status to one or more cloud-based data service applications according to the mapping, and, if pushing the event message is successful,
   setting the message status data for the event to a published status.
28. The method of embodiment 27, wherein if pushing the event is unsuccessful, the error flow further comprises:
   increasing, by the cloud-based virtual machine cluster, retry count data in the event storage database for the event by 1; and
   repeating the above method steps until the retry count data is greater than or equal to the predetermined number of retry push attempts.
29. The method of embodiment 27 or embodiment 28, wherein if the retry count data is greater than or equal to the predetermined number of retry push attempts, the error flow further comprises:
   setting, by the cloud-based virtual machine cluster, the message status data for the event message to a retry failed status; and, optionally,
   sending, to an administrator, a notification of retry failure based on the retry failed status.
30. The method of any of embodiments 27 to 29, wherein the retry count data is initialised at 0 prior to identifying the one or more event messages of the first event type in the event storage database.
31. The method of any of embodiment 27 to embodiment 30, wherein the retry mapping is the first mapping.
32. The method of any preceding embodiment, further comprising:
   identifying, by the cloud-based virtual machine cluster, whether the first mapping corresponding to the first event type requires the one or more event messages to be decrypted; and
   decrypting, by a cloud-based decryption service, the one or more event messages based upon the first mapping prior to updating the metadata associated with the one or more event messages.
33. The method of embodiment 32, wherein the cloud-based decryption service is implemented as a serverless application.
34. The method of embodiment 33, wherein the cloud-based decryption service is an AWS Lambda function.
35. The method of embodiment 33 or embodiment 34, further comprising:
   initialising, by the cloud-based virtual machine cluster, the cloud-based decryption service for decrypting the one or more event messages; and
   receiving, at the cloud-based virtual machine cluster, one or more decrypted event messages from the cloud-based decryption service.
36. The method of any of embodiment 32 to embodiment 35, wherein the one or more event messages are partially decrypted based upon the first mapping corresponding to the first event type.
37. The method of any preceding embodiment, further comprising:
   generating, by the cloud-based virtual machine cluster, reconciliation data based upon pushing the one or more event messages to the one or more cloud-based data service applications according to the first mapping.
38. The method of embodiment 37, further comprising:
   saving, by the cloud-based virtual machine cluster, the reconciliation data to a data repository.
39. The method of embodiment 38, wherein the data repository is a domain database and, optionally, wherein the data repository is an Amazon S3 bucket.
40. The method of any of embodiment 37 to embodiment 39, wherein the reconciliation data comprises one or more of: a process completion timestamp, a total event count indicator, a processed event count indicator, a failed event count indicator, a retry eligibility count indicator and/or a failed event list.
41. The method of embodiment 40, wherein, for each event message which failed to be pushed to one or more cloud-based data service applications according to the first mapping, the failed event list comprises a failed event data structure, wherein, optionally, the failed event data structure includes the event type, an event message identifier and the message status data.
42. The method of any preceding embodiment, further comprising:
   receiving, at the cloud-based virtual machine cluster, a second publication trigger signal indicating that one or more event messages of the first event type are to be published, wherein the one or more event messages of the first event type are stored in an event storage database;
   identifying, by the cloud-based virtual machine cluster, the one or more event messages of the first event type in the event storage database;
   retrieving, by the cloud-based virtual machine cluster, the one or more event messages of the first event type from the event storage database;
   identifying, by the cloud-based virtual machine cluster, the first mapping from a plurality of stored mappings, the first mapping corresponding to the first event type;
   retrieving, by the cloud-based virtual machine cluster, the first mapping;
   updating, by the cloud-based virtual machine cluster, metadata associated with the one or more event messages of the first event type to indicate that publication has occurred; and
   pushing, by the cloud-based virtual machine cluster, the one or more event messages of the first event type to the same or one or more different cloud-based data service applications according to the first mapping.
43. The method of any preceding embodiment, wherein the first publication trigger signal further indicates that one or more event messages of a second event type are to be published, wherein the one or more event messages of the second event type are stored in the event storage database, the method further comprising:
   identifying, by the cloud-based virtual machine cluster, the one or more event messages of the second event type in the event storage database;
   retrieving, by the cloud-based virtual machine cluster, the one or more event messages of the second event type from the event storage database;
   identifying, by the cloud-based virtual machine cluster, a second mapping from a plurality of stored mappings, the second mapping corresponding to the second event type;
   retrieving, by the cloud-based virtual machine cluster, the second mapping;
   updating, by the cloud-based virtual machine cluster, metadata associated with the one or more event messages of the second event type to indicate that publication has occurred; and
   pushing, by the cloud-based virtual machine cluster, the one or more event messages of the second event type to the same or one or more different cloud-based data service applications according to the second mapping.
44. The method of any preceding embodiment, wherein the one or more cloud-based data service application is Kafka, SQS or Kinesis.
45. The method of any of embodiment 1 to embodiment 42, wherein the one or more cloud-based data service application is Kinesis.
46. The method of any preceding embodiment, wherein the cloud-based virtual machine cluster is implemented with Amazon EC2.
47. The method of any preceding embodiment, wherein the event storage database is a non-relational database, optionally wherein the event storage database is an Amazon DynamoDB database.
48. The method of any preceding embodiment, wherein pushing the one or more event messages of the first event type to the one or more cloud-based data service applications according to the first mapping further comprises:
   assuming, by the cloud-based virtual machine cluster, a producer role in one or more domains corresponding to the one or more cloud-based data service applications; and
   publishing, by the cloud-based virtual machine cluster, the one or more event messages of the first event type to the one or more cloud-based data service applications based on the producer role.
49. The method of any preceding embodiment, further comprising:
   recording, by a cloud-based compliance service, administration data based on at least unsuccessful pushing of the one or more events, wherein, optionally, the cloud-based compliance service is Amazon Cloud Watch.
50. A computer program product comprising instructions which, when executed by a cloud-based virtual machine cluster, cause the cloud-based virtual machine cluster to perform the steps of any preceding embodiment.
51. A (non-transitory) computer readable medium comprising instructions which, when executed by a cloud-based virtual machine cluster, cause the cloud-based virtual machine cluster to perform the method of any of embodiments 1 to 48.
52. A cloud-based virtual machine cluster, the cloud-based virtual machine cluster comprising at least one processor, wherein the at least one processor is configured to perform the method of any of embodiments 1 to 48.

## Claims

1. A computer-implemented method for pushing one or more event messages to one or more cloud-based data service applications, the method comprising:
receiving, at a cloud-based virtual machine cluster, a first publication trigger signal indicating that one or more event messages of a first event type are to be published, wherein the one or more event messages of the first event type are stored in an event storage database;
identifying, by the cloud-based virtual machine cluster, the one or more event messages of the first event type in the event storage database;
retrieving, by the cloud-based virtual machine cluster, the one or more event messages of the first event type from the event storage database;
identifying, by the cloud-based virtual machine cluster, a first mapping from a plurality of stored mappings, the first mapping corresponding to the first event type;
retrieving, by the cloud-based virtual machine cluster, the first mapping;
updating, by the cloud-based virtual machine cluster, metadata associated with the one or more event messages of the first event type to indicate that publication has occurred; and
pushing, by the cloud-based virtual machine cluster, the one or more event messages of the first event type to one or more cloud-based data service applications according to the first mapping.

2. The method of claim 1, wherein the event storage database further comprises message status data for each of the one or more event messages of the first event type.

3. The method of any preceding claim, further comprising:
generating, by a cloud-based signalling service, the first publication trigger signal; and
sending, from the cloud-based signalling service to the cloud-based virtual machine cluster, the first publication trigger signal when a predetermined time is reached;
wherein optionally, the first publication trigger signal indicates more than one event messages to be published.

4. The method of claim 2, further comprising:
identifying, by a cloud-based signalling service, ready-to-publish statuses in the message status data of the one or more event messages;
generating, by the cloud-based signalling service, the first publication trigger signal in response to the one or more identified ready-to-publish statuses; and
sending, from the cloud-based signalling service to the cloud-based virtual machine cluster, the first publication trigger signal;
wherein optionally, the first publication trigger signal indicates one event message to be published.

5. The method of any preceding claim, wherein, if the first mapping corresponding to the first event type cannot be identified, the method further comprises:
processing, by the cloud-based virtual machine cluster, an error flow in response to failing to identify a first mapping corresponding to the first event type.

6. The method of any preceding claim, further comprising:
assessing, by the cloud-based virtual machine cluster, whether a schema of one or more event messages of the first event type needs to be validated.

7. The method of claim 6, wherein if the schema of the first event type needs to be validated, the method further comprises:
validating, by a cloud-based registry service, the schema for each of the one or more event messages of the first event type against schema records stored in the cloud-based registry service; and optionally, if an event message fails validation against the schema records stored in the cloud-based registry service,
processing, by the cloud-based virtual machine cluster, an error flow corresponding to the event message which failed validation against the schema records stored in the cloud-based registry service.

8. The method of claim 5 or claim 7, wherein the error flow comprises the steps of;
determining, by the cloud-based virtual machine cluster, if the event message failed validation; and
if the event message failed validation, updating the message status data for the event message to a validation failure status and ending processing of the event message; or
if the event message passed validation, repeating the failed method step until the failed method step succeeds or a predetermined number of retry step attempts is reached.

9. The method of any preceding claim, further comprising:
identifying, by the cloud-based virtual machine cluster, whether the first mapping corresponding to the first event type requires the one or more event messages to be decrypted; and
decrypting, by a cloud-based decryption service, the one or more event messages based upon the first mapping prior to updating the metadata associated with the one or more event messages.

10. The method of any preceding claim, further comprising:
generating, by the cloud-based virtual machine cluster, reconciliation data based upon pushing the one or more event messages to the one or more cloud-based data service applications according to the first mapping.

11. The method of any preceding claim, further comprising:
receiving, at the cloud-based virtual machine cluster, a second publication trigger signal indicating that one or more event messages of the first event type are to be published, wherein the one or more event messages of the first event type are stored in an event storage database;
identifying, by the cloud-based virtual machine cluster, the one or more event messages of the first event type in the event storage database;
retrieving, by the cloud-based virtual machine cluster, the one or more event messages of the first event type from the event storage database;
identifying, by the cloud-based virtual machine cluster, the first mapping from a plurality of stored mappings, the first mapping corresponding to the first event type;
retrieving, by the cloud-based virtual machine cluster, the first mapping;
updating, by the cloud-based virtual machine cluster, metadata associated with the one or more event messages of the first event type to indicate that publication has occurred; and
pushing, by the cloud-based virtual machine cluster, the one or more event messages of the first event type to the same or one or more different cloud-based data service applications according to the first mapping.

12. The method of any preceding claim, wherein the one or more cloud-based data service application is Kafka, SQS or Kinesis.

13. A computer program product comprising instructions which, when executed by a cloud-based virtual machine cluster, cause the cloud-based virtual machine cluster to perform the steps of any preceding claim.

14. A (non-transitory) computer readable medium comprising instructions which, when executed by a cloud-based virtual machine cluster, cause the cloud-based virtual machine cluster to perform the method of any of claims 1 to 12.

15. A cloud-based virtual machine cluster, the cloud-based virtual machine cluster comprising at least one processor, wherein the at least one processor is configured to perform the method of any of claims 1 to 12.

## Amended claims

### Amended claims in accordance with Rule 137(2) EPC.

1. A computer-implemented method (700) for pushing one or more event messages to one or more cloud-based data service applications, the method comprising:
receiving (710), at a cloud-based virtual machine cluster, a first publication trigger signal indicating that one or more event messages of a first event type are to be published, wherein the one or more event messages of the first event type are stored in an event storage database (63);
identifying (720), by the cloud-based virtual machine cluster, the one or more event messages of the first event type in the event storage database;
retrieving (730), by the cloud-based virtual machine cluster, the one or more event messages of the first event type from the event storage database;
identifying (740), by the cloud-based virtual machine cluster, a first mapping from a plurality of stored mappings, the first mapping corresponding to the first event type;
retrieving (750), by the cloud-based virtual machine cluster, the first mapping;
updating (760), by the cloud-based virtual machine cluster, metadata associated with the one or more event messages of the first event type to indicate that publication has occurred; and
pushing (770), by the cloud-based virtual machine cluster, the one or more event messages of the first event type to one or more cloud-based data service applications (13b, 13c, 13d, 13e) according to the first mapping.

2. The method of claim 1, wherein the event storage database further comprises message status data for each of the one or more event messages of the first event type.

3. The method of any preceding claim, further comprising:
generating, by a cloud-based signalling service, the first publication trigger signal; and
sending, from the cloud-based signalling service to the cloud-based virtual machine cluster, the first publication trigger signal when a predetermined time is reached;
wherein optionally, the first publication trigger signal indicates more than one event messages to be published.

4. The method of claim 2, further comprising:
identifying, by a cloud-based signalling service, ready-to-publish statuses in the message status data of the one or more event messages;
generating, by the cloud-based signalling service, the first publication trigger signal in response to the one or more identified ready-to-publish statuses; and
sending, from the cloud-based signalling service to the cloud-based virtual machine cluster, the first publication trigger signal;
wherein optionally, the first publication trigger signal indicates one event message to be published.

5. The method of any preceding claim, wherein, if the first mapping corresponding to the first event type cannot be identified, the method further comprises:
processing, by the cloud-based virtual machine cluster, an error flow in response to failing to identify a first mapping corresponding to the first event type.

6. The method of any preceding claim, further comprising:
assessing, by the cloud-based virtual machine cluster, whether a schema of one or more event messages of the first event type needs to be validated.

7. The method of claim 6, wherein if the schema of the first event type needs to be validated, the method further comprises:
validating, by a cloud-based registry service, the schema for each of the one or more event messages of the first event type against schema records stored in the cloud-based registry service; and optionally, if an event message fails validation against the schema records stored in the cloud-based registry service,
processing, by the cloud-based virtual machine cluster, an error flow corresponding to the event message which failed validation against the schema records stored in the cloud-based registry service.

8. The method of claim 5 or claim 7, wherein the error flow comprises the steps of;
determining, by the cloud-based virtual machine cluster, if the event message failed validation; and
if the event message failed validation, updating the message status data for the event message to a validation failure status and ending processing of the event message; or
if the event message passed validation, repeating the failed method step until the failed method step succeeds or a predetermined number of retry step attempts is reached.

9. The method of any preceding claim, further comprising:
identifying, by the cloud-based virtual machine cluster, whether the first mapping corresponding to the first event type requires the one or more event messages to be decrypted; and
decrypting, by a cloud-based decryption service, the one or more event messages based upon the first mapping prior to updating the metadata associated with the one or more event messages.

10. The method of any preceding claim, further comprising:
generating, by the cloud-based virtual machine cluster, reconciliation data based upon pushing the one or more event messages to the one or more cloud-based data service applications according to the first mapping; and
storing, by the cloud-based virtual machine cluster, the reconciliation data in a data repository.

11. The method of any preceding claim, further comprising:
receiving, at the cloud-based virtual machine cluster, a second publication trigger signal indicating that one or more event messages of the first event type are to be published, wherein the one or more event messages of the first event type are stored in an event storage database;
identifying, by the cloud-based virtual machine cluster, the one or more event messages of the first event type in the event storage database;
retrieving, by the cloud-based virtual machine cluster, the one or more event messages of the first event type from the event storage database;
identifying, by the cloud-based virtual machine cluster, the first mapping from a plurality of stored mappings, the first mapping corresponding to the first event type;
retrieving, by the cloud-based virtual machine cluster, the first mapping;
updating, by the cloud-based virtual machine cluster, metadata associated with the one or more event messages of the first event type to indicate that publication has occurred; and
pushing, by the cloud-based virtual machine cluster, the one or more event messages of the first event type to the same or one or more different cloud-based data service applications according to the first mapping.

12. The method of any preceding claim, wherein the one or more cloud-based data service application is Kafka, SQS or Kinesis.

13. A computer program product comprising instructions which, when executed by a cloud-based virtual machine cluster, cause the cloud-based virtual machine cluster to perform the steps of any preceding claim.

14. A (non-transitory) computer readable medium comprising instructions which, when executed by a cloud-based virtual machine cluster, cause the cloud-based virtual machine cluster to perform the method of any of claims 1 to 12.

15. A cloud-based virtual machine cluster, the cloud-based virtual machine cluster comprising at least one processor, wherein the at least one processor is configured to perform the method of any of claims 1 to 12.
